(19) Europäisches Patentamt
European Patent Office
Office européen des brevets

(11) EP 2 276 104 A1

(12) EUROPEAN PATENT APPLICATION
published in accordance with Art. 153(4) EPC

(43) Date of publication:
**19.01.2011 Bulletin 2011/03**

(51) Int Cl.:
***H01M 14/00*** *(2006.01)* ***H01L 31/04*** *(2006.01)*

(21) Application number: **09746517.3**

(22) Date of filing: **01.05.2009**

(86) International application number:
**PCT/JP2009/058558**

(87) International publication number:
**WO 2009/139310 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **12.05.2008 JP 2008124534**

(71) Applicant: **Konica Minolta Business Technologies, Inc.**
**Tokyo 100-0005 (JP)**

(72) Inventors:
- **ITOH Hiroaki**
**Hino-shi**
**Tokyo 191-8511 (JP)**
- **KAWAHARA Yusuke**
**Hino-shi**
**Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

# (54) DYE-SENSITIZED SOLAR CELL AND METHOD FOR MANUFACTURING THE SAME

(57) Disclosed is a dye-sensitized solar cell wherein an improved photoelectric conversion efficiency is realized by suppressing reverse electron transfer and improving conductivity of electrodes. Corrosion of electrodes by an electrolyte solution is greatly suppressed in the dye-sensitized solar cell. Amethod for manufacturing the dye-sensitized solar cell is also disclosed. The dye-sensitized solar cell comprises: an anode electrode wherein a conductive base containing at least a metal collector grid and a semiconductor porous film layer to which a sensitizing dye is adsorbed are arranged on a light-transmitting substrate; a cathode electrode so arranged as to face the semiconductor porous film layer of the anode electrode; and an electrolyte sealed between two electrode pieces, namely between the anode electrode and the cathode electrode. The dye-sensitized solar cell is **characterized in that** an intermediate layer is arranged between the conductive base and the semiconductor porous film layer and the intermediate layer has a water vapor transmission rate of not more than 0.1 g ($m^2 \cdot 24h$).

EP 2 276 104 A1

## Description

### TECHNICAL FIELD

The present invention relates to a dye-sensitized type solar cell. Especially, the present invention relates to a dye-sensitize,d type solar cell which is excellent in photoelectric conversion efficiency and whose has an improved durability and to a production method of the same.

### BACKGROUND ART

In recent years, a dye-sensitized type solar cell draws attention as a solar cell employing an organic material to replace a silicon type solar cell, and research and development for it have been done actively. Principles of operation of general dye-sensitized type solar cells are as follows. When sensitizing dyes adsorbing on metal oxide on a semiconductor electrode absorb sunlight, the sensitizing dyes generate excited electrons. Then the excited electrons move to a metal oxide semiconductor, pass through a circuit connected to an electrode via a transparent conducting film, and further move to an opposite electrode. The electrons having shifted to the opposite electrode reduce an electrolytic solution, and then the electrolytic solution discharges electrons, whereby the sensitizing dyes in the oxidized state are reduced.

In the conventional dye-sensitized type solar cells, since a metal oxide semiconductor layer is porous, an electrolytic solution comes in contact with a transparent conductive film. Accordingly, a reverse shift of electrons may occur such that excited electrons are injected from the transparent conductive film to the electrolytic solution so as to reduce an open voltage. As a result, there is a problem that photoelectric conversion efficiency lowers. Further, in the case of employing an electrolytic solution containing iodine redox, there is another problem that due to the condition that the electrolytic solution comes in contact with a transparent conductive film, the electrolytic solution corrodes the transparent conductive film so that the durability of the transparent conductive film is flowered.

As a means for solving such problems, disclosed are techniques with which a dense layer mainly composed of metal oxides is provided between a transparent conductive film and a metal oxide semiconductor layer so as to prevent a reverse shift of electrons and to improve photoelectric conversion efficiency (for example, refer to Patent documents 1 and 2). However, with these techniques, although the reverse shift of electrons can be suppresses, electrons which shift normally and reach an electrode, are not made to flow efficiently to an external circuit. As a result, satisfactory photoelectric conversion efficiency has not yet been attained.

On the other hand, in the conventional dye-sensitized type solar cells, as a transparent conducting film, a metal oxide thin film of indium doped tin oxide (ITQ) or fluorine doped tin oxide (FTO) is formed by vacuum deposition, a spattering process, or the like on a substrate. However, in this conventional transparent conducting film, the material cost and the manufacturing cost are expensive, and further the abovementioned metal oxide constituting a transparent conducting film has a defect that resistibility is remarkably high as compared with metal, and the defect become one of causes by which photoelectric conversion efficiency in a solar cell lowers. Although the resistibility can be reduced by the thicker thickness of a transparent conducting film, the thicker thickness makes light transmission lower and causes the rising of a material cost and a manufacturing cost.

As a means for solving such problems, proposed are techniques with which a metallic net-like or lattice-shaped current-collecting thin film is provided as a transparent conductive film so as to improve a conductivity of an electrode, and further the metallic current collecting thin film is covered with a corrosion prevention layer composed of an insulating layer so as to prevent a metal from being corroded by an electrolytic solution (for example, refer to Patent Documents 3 and 4).

However, with these techniques, the improvement of conductivity and the prevention of corrosion may be attained to a certain extent. However, photoelectric conversion efficiency and durability have not yet been satisfied sufficiently.

For such problems, reported are techniques with which a substrate itself is provided with barrier properties to steam or gas (oxygen etc.) (for example, patent documents 5), or a covering layer to act as a barrier to steam and gas (oxygen etc.) is newly provided (for example, patent documents 6), so as to satisfy both efficiency of element and durability. However, although these techniques report to solve problems for steam or gas (oxygen etc.) which comes in from the outside of elements, these techniques teach nothing about the effect for the corrosion resistant properties of a metal wire electrode for the above electrolytic solution.

## PRIOR ART DOCUMENT

## PATIENT DOCUMENT

Patent Document 1: Japanese Unexamined Patent Publication No. 2002-75471, official report
Patent Document 2: Japanese Unexamined Patent Publication No. 2002-151168, official report
Patent document 3: International Publication No. 04/86464, pamphlet
Patent Document 4: Japanese Unexamined Patent Publication No. 2007-42366, official report
Patent Document 5: Japanese Unexamined Patent Publication No. 2006-278298, official report
Patent Document 6: Japanese Unexamined Patent Publication No. 2003-282163, official report

## OUTLINE OF INVENTION

## PROBLEMS TO BE SOLVED BY THE INVENTION

The present invention is to solve the abovementioned conventional problems, and an object of the present invention is to provide a dye-sensitized type solar cell which suppresses the reverse shift of electrons and improves the conductivity of an electrode so as to realize excellent photoelectric conversion efficiency and also suppresses the corrosion of an electrode by an electrolytic solution greatly, and a production method of the same.

## MEANS FOR SOLVING THE PROBLEMS

The present invention have solved the problems by providing an interlayer between a metallic current-collecting grid and a semiconductor porous film layer and by designing a moisture vapor permeation rate of this interlayer properly.
Hereafter, the present invention will be explained concretely.

1. In a dye-sensitized type solar cell constituted by an anode electrode in which at least a conductive substrate including a metallic current-collecting grid and a semiconductor porous film layer adsorbed with sensitizing dyes are stacked on a light transmissive substrate; a cathode electrode arranged opposite to the semiconductor porous film layer of the anode electrode; and an electrolyte encapsulated between two electrodes of the anode electrode and the cathode electrode, the dye-sensitized type solar cell is characterized by comprising an interlayer between the conductive substrate and the semiconductor porous film layer and the interlayer has a moisture vapor permeation rate of 0.1 g/($m^2$•24h) or less.
2. The dye-sensitized type solar cell described in 1 **characterized in that** the thickness of the interlayer is 5 nm or more and 100 nm or less.
3. In a producing method of a dye-sensitized type solar cell constituted by an anode electrode in which at least a conductive substrate including a metallic current-collecting grid and a semiconductor porous film layer adsorbed with sensitizing dyes are stacked on a light transmissive substrate; a cathode electrode arranged opposite to the semiconductor porous film layer of the anode electrode; and an electrolyte encapsulated between two electrodes of the anode electrode and the cathode electrode, the producing method of the dye-sensitized type solar cell is **characterized in that** an interlayer is provided between the conductive substrate and the semiconductor porous film layer and the interlayer is formed by a plasma CVD method under an atmospheric pressure or a pressure near the atmospheric pressure in the presence of a carrier gas composed of at least an organometal compound, a reducing gas, and a rare gas, or nitrogen.

## EFFECT OF THE INTENTION

According to the present invention, it becomes possible to provide a dye-sensitized type solar cell which realizes excellent photoelectric conversion efficiency, also suppresses the corrosion of an electrode by an electrolytic solution greatly, and is excellent in durability.

## BRIEF DESCRIPTION OF THE DRAWINGS

Fig. 1 is an outline cross sectional view showing a basic structure of a dye-sensitized type solar cell of the present

invention.

Fig. 2 is an outline schematic view showing an example of an atmospheric pressure plasma treatment apparatus which can be used in the present invention.

Fig. 3 is an outline schematic view showing another example of an atmospheric pressure plasma treatment apparatus which can be used in the present invention.

## EMBODIMENT FOR CARRYING OUT THE INVENTION

Hereafter, the best mode for carrying out the present invention will be explained in detail.

«Dye-sensitized type solar cell»

First, the dye-sensitized type solar cell of the present invention will be explained with reference to Fig.1. Fig. 1 is an outline cross sectional view showing a basic structure of the dye-sensitized type solar cell of the present invention. As shown in Fig. 1, the dye-sensitized type solar cell of the present invention comprises a metallic current-collecting layer (current-collecting grid) 1 a and a transparent conductive layer 1 as a preferable embodiment in here on a transparent substrate 5a as a conductive substrate; further comprises thereon an anode electrode in which a metal oxide interlayer 6 and a metal oxide semiconductor layer (semiconductor porous film layer) 2 constituted by a semiconductor layer on the surface of which dyes are made to adsorb, are laminated (or stacked), and a charge transfer layer 3 (also referred to as "electrolyte layer") sequentially in this order; and comprises a conductive layer 4 on the surface of a substrate 5 as an opposite electrode (cathode electrode).

At the time of producing the dye-sensitized type solar cell of the present invention, it is desirable that the abovementioned constitution is accommodated into a case and sealed (encapsulated), or the entire body of the above-mentioned constitution is sealed with resin.

When the dye-sensitized type solar cell of the present invention is irradiated with sunlight or electromagnetic waves equivalent to sunlight, dyes made to adsorb on the metal oxide semiconductor layer (semiconductor porous film layer) 2 absorb the irradiated sunlight or electromagnetic waves and excite. Electrons generated by the excitation of the dyes move through the metal oxide semiconductor layer 2 and the metal oxide interlayer 6 to the metallic current-collecting metal layer 1 a and the transparent conductive layer 1, subsequently moves through an external circuit to the conductive layer 4 of the opposite electrode, and then reduces the redox electrolyte of the charge transfer layer 3.

On the other hand, after the dyes have made the electrons move, the dyes became oxidants. However, when electrons are fed to the anode electrode from the opposite electrode (cathode electrode) through the redox electrolyte of the charge transfer layer 3, the dyes are reduced and return to the original state. At this time, the redox electrolyte of the charge transfer layer 3 is simultaneously oxidized and returns to the condition that the redox electrolyte can be reduced again by electrons fed from the opposite electrode. In this way, electrons flow, whereby the dye-sensitized type solar cell of the present invention can be constituted.

<Interlayer>

The dye-sensitized type solar cell of the present invention is characterized by comprising an interlayer having a moisture vapor permeation rate of 0.1 $g/(m^2 \bullet 24h)$ or less between a conductive substrate (hereafter, also referred to as a conductive layer) containing a current-collecting grid made of metal (hereafter, also referred to as a metallic current collecting layer) and a metal oxide semiconductor layer (semiconductor porous film layer).

Herein, the moisture vapor permeation rate is represented by a permeation amount of moisture vapor per a unit area and a unit time, and can be evaluated by the use of PERMATRAN-W3/33G type moisture vapor permeation rate measuring apparatus manufactured by MOCON Corporation under the condition of 40 °C. and 90%RH in accordance with JIS K7129: 1992B method.

When moisture vapor permeation rate is $10^{-2}$ $g/(m^2 \bullet 24h)$ or less, the evaluation of the moisture absorption product of metal calcium under the condition of 40 °C and 90%RH makes it possible to evaluate the moisture vapor permeation rate more accurately. Also, this technique is desirable in the present invention.

The moisture vapor permeation rate of the interlayer is preferably $10^{-8}$ $g/(m^2 \bullet 24h)$ or more and 0.1 $g/(m^2 \bullet 24h)$ or less, and more preferably $10^{-6}$ $g/(m^2 \bullet 24h)$ or more and $10^{-2}$ $g/(m^2 \bullet 24h)$ or less.

Specific examples of metal oxides which constitute the interlayer, include: titanium oxide, zinc oxide, zirconium oxide, strontium titanate, niobium oxide, and the like. These metal oxides may be employed solely, as a mixture of them, or as a composite metal oxide doped with a metal atom.

A preferable mode of the metal oxide interlayer is to additionally have a function to suppress the reverse shift of electrons, and it is preferable to employ a metal oxide having an electric potential of the conduction band lower end with the same level or a lower level to the electric potential of the conduction band lower end of the semiconductor porous

film layer.

The thickness of the metal oxide interlayer is preferably 1 nm or more and 200 nm or less, more preferably 5 nm or more and 100 nm or less, and still more preferably 5 nm or more and 50 nm or less. The porosity of the metal oxide interlayer is preferably smaller than that of the metal oxide semiconductor layer, and specifically, it is preferably 10% or less, more preferably 1% or less, and still more preferably 0.5% or less. When the porosity of the metal oxide interlayer becomes small, it is desirable, because the moisture vapor transmission rate becomes lower greatly. Further, the shift of electrons in the reverse direction becomes so as to hardly occur. As a result, the adhesiveness between the metal oxide interlayer and the conductive substrate and the durability of the metal oxide interlayer can be greatly improved. Further, the metal oxide interlayer may be made in a laminated structure with two or more layers, and the composition and thickness of the metal oxides constituting the metal oxide interlayer can be controlled arbitrarily.

Herein, the porosity means a porosity which has penetrability in the thickness direction of a dielectric substance, and the porosity can be measures by the use of commercially available apparatus such as a mercury porosimeter (Shimazu Porerizer 9220 type) and the like.

As far as the moisture vapor permeation rate of the present invention can be obtained, the production method of the metal oxide interlayer is not restricted specifically, and as such a production method, employable are various thin film forming methods, such as a vacuum deposition method, an ion sputtering method, an ion plating method, a casting method, a coating method, a spin coating method, a spraying method, an aerosol deposition method (AD method), a dip coating method, an electrolytic polymerization method, an optical electrolytic polymerization method, a pressing method, and the like.

As a preferable embodiment of the production method of the metal oxide interlayer which can achieve the moisture vapor permeation rate of the present invention, employable is a metal oxide thin film forming method using a plasma irradiation method or a plasma CVD method under an atmospheric pressure or a pressure equivalent to the atmospheric pressure.

In the present invention, an atmospheric pressure or a pressure equivalent to the atmospheric pressure is about 20 kPa to 110 kPa. In order to obtain the good effect described in the present invention, a pressure of 93 kPa to 104kPa is desirable.

As a forming method of the metal oxide interlayer, the following ways can be preferably employed in the present invention.

(1) First way: a conductive substrate is immersed beforehand in a solution of a metal compound, and the conductive substrate is subjected to a dry process, and then is processed in plasma containing oxygen so as to an interlayer.
(2) Second way: plasma is produced with a metal compound gas and a gas containing oxygen and a conductive substrate is sprayed with the plasma so as to form an interlayer.

In the first way (1), when a conductive substrate is immersed in a dilute solution of a metal compound, the surface of the conductive substrate is covered with reactive sol, and thereafter the conductive substrate is irradiated with plasma containing oxygen radical, whereby a uniform coat layer can be formed on the surface of the conductive substrate in a very short time.

Also, in the second way (2), with the process that the conductive substrate is irradiated with plasma under the existence of a mixed gas of a metal compound and oxygen, it is possible to form a coat layer on the surface of the conductive substrate.

as a method of forming a coat on a surface of a conductive substrate, any of the first way (1) and the second way (2) may be employed. Specifically, since the second way (2) can form a high density layer, the second way (2) has a feature excellent in moisture vapor permeation rate. On the other hand, since the first way (1) can be expected to improve a short-circuit current Jsc ($mA/cm^2$) presumed as a reduction effect of an internal resistance due to its uniformity, the first way may be said as a more preferable technique in the present invention. Further, a technique combining the first way and the second way is also a more preferable technique in the present invention.

Metallic compounds (hereafter, also referred to as organometal compounds) which can be preferably employed in the production method relating to the present invention, are preferably organometal compounds in which metals and organic compounds are covalently boded, coordinately bonded or ionically bonded, and examples of organometal compounds include metal alkoxides, metal acylates, metal chelates, organic metal salts, and the like. Other than the organometal compounds, halogen metal compounds may be employed. In the present invention, from viewpoints of reactivity and stability, it is desirable to employ metal alkoxide, halogen metal compounds.

As the organometal compounds useful in the present invention, compounds represented by the following general formula are desirable. However, the present invention is not limited to these compounds.

General formula: $MR^1_xR^2_yR^3_z$

In the above general formula, M represents metal (for example, Li, Be, B, Na, Mg, Al, Si, K, Ca, Sc, Ti, V, Cr, Mn, Fe, Co, Ni, Cu, Zn, Ga, germanium, Rb, Sr, Y, Zr, Nb, Mo, Cd, In, Ir, Sn, Sb, Cs, Ba, La, Hf, Ta, W, Tl, Pb, Bi, Ce,

Pr, Nd, Pm, Eu, Gd, Tb, Dy, Ho, Er, Tm, Yb, Lu, etc.); $R^1$ represents an alkyl group; $R^2$ represents an alkoxy group; $R^3$ represents a group selected from a β-diketone coordinating group; a β-ketocarboxylic acid ester coordinating group, a β-ketocarboxylic acid coordinating group, and a keto oxy group (keto oxy coordinating group); and, when the valence of a metal M is set to m, x + y + z = m, x = 0 to m or x =0 to m-1, y = 0 to m, and z = 0 to m, and each of x, y and z is 0 or a positive integer.

Examples of an alkyl group represented with $R^1$, include: a methyl group, an ethyl group, a propyl group, a butyl group, and the like.

Examples of an alkoxy group represented with $R^2$, include: a methoxy group, an ethoxy group, a propoxy group, a butoxy group, a 3,3,3-trifluoropropoxy group, and the like.

Further, a hydrogen atom of the alkyl group may be substituted with a fluorine atom.

As a group which is represented with $R^3$ and selected from a β-diketone coordinating group; a β-ketocarboxylic acid ester coordinating group, a β-ketocarboxylic acid coordinating group, and a keto oxy group (keto oxy coordinating group); examples of the β-diketone coordinating group include 2,4-pentane dione (may be also referred to as acetylacetone or aceto acetone),1,1,1,5,5,5-hexamethyl-2,4-pentane dione, 2,2,6,6-tetra-methyl -3,5-heptane dione, 1,1,1-trifluoro- 2,4-pentane dione, etc.; examples of the β-ketocarboxylic acid ester coordinating group include acetoacetic acid methyl ester, acetoacetic acid ethyl ester, acetoacetic acid propyl ester, trimethyl acetoacetic acid ethyl, trifluoromethyl acetoacetate, etc.; examples of the β-ketocarboxylic acid coordinating group include acetoacetic acid, trimethyl acetoacetic acid, etc.; and examples of the keto oxy coordinating group include an aceto oxy group (or an acetoxy group), a propionyloxy group, a butyroyloxy group, an acryloyl oxy group, a methacryloyloxy group and the like.

The number of carbon atoms of these groups including the abovementioned organometal compound is preferably 18 or less. Further, as exemplified, these groups may be a straight chain form or a branch form, and a hydrogen atom may be substituted with a fluorine atom.

In the present invention, from a viewpoint of handling, an organometal compound with little danger of explosion is desirable, and an organometal compound which includes at least one or more oxygen in its molecule is desirable.

As such an organometal compound, an organometal compound including at least one alkoxy group represented with $R^2$ or an organometal compound including at least one group which is represented with $R^3$ and selected from a β-diketone coordinating group; a β-ketocarboxylic acid ester coordinating group, a β-ketocarboxylic acid coordinating group, and a keto oxy group (keto oxy coordinating group), is preferable.

Hereafter, specific metallic compounds are shown.

Examples of organic titanium compounds include: organic titanium compounds, titanium hydrides, halogenated titanium, and the like. Examples of organic titanium compounds include: triethoxy titanium, trimethoxy titanium, triisopropoxy titanium, tributoxy titanium, tetraethoxytitanium, tetraisopropoxy titanium, methyldimethoxytitanium, ethyl triethoxy titanium, methyl triisopropoxy titanium, triethyltitanium, triisopropyl titanium, tributyltitanium, tetraethyltitanium, tetraisopropyltitanium, tetrabutyltitanium, tetra dimethylamino titanium, dimethyl titanium di(2,4-pentan dionate), ethyl titanium tri(2,4-pentan dionate), titanium tris (2,4-pentan dionate), titanium tris (aceto methylacetate), triacetoxytitanium, dipropoxy propionyloxy titanium, dibutyryloxytitanium, etc.; examples of titanium hydrides include mono- titanium hydride, dititanium hydrogen compound, etc.; and examples of halogenated titanium include trichlorotitanium, tetrachlorotitanium, and the like, and these compounds may be employed preferably in the present invention. Further, two or more kinds of these compounds may be used as a mixture.

Examples of tin compounds include organic tin compounds, tin hydrides, halogenated tins, and the like. Examples of organic tin compounds include tetraethyl tin, tetra-methyl- tin, diacetic acid di-n-butyl, tetrabutyltin, tetraoctyl tin, tetraethoxy tin, methyl triethoxytin, diethyldiethoxy tin, triisopropyl ethoxytin, diethyl tin, dimethyl tin, diisopropyl tin, dibutyl tin, diethoxy tin, dimethoxy tin, diisopropoxy tin, dibutoxy tin, tin dibutyrate, tin diacetacetonate, ethyl tin acetacetonate, ethoxy tin, acetacetonate, dimethyl tin diacetacetonate, etc; tin hydrides; halogenated tin such as tin dichloride, a tin tetrachloride, and the like.

Examples of organosilicon compounds, include tetraethyl silan, tetramethyl silane, tetraisopropyl silan, tetrabutyl silan, tetra ethoxy silan, tetraisopropoxy silan, tetra butoxy silan, dimethyl dimethoxy silan, diethyl diethoxy silan, diethyl silan di(2,4-pentan dionate), methyl trimethoxy silan, a methyl triethoxy silan, ethyl triethoxy silan, etc.; examples of silicon hydride include tetra hydrogenated silan, hexa hydrogenated disilane, etc.; examples of silicon halide compounds include tetrachloro silan, methyltrichloro silan, diethyldichloro silan, and the like, and these compounds may be employed preferably in the present invention.

Examples of aorganic zirconium compounds iclude a zirconium ethoxide, zirconium iso propoxide, zirconium n-propoxide, zirconium n-butoxide, zirconium t-butoxide, zirconium 2-ethyl hexyl oxide, zirconium 2rmethyl-2-butoxide, tetrakis(trimethyl siloxy)zirconium, zirconium di n-butoxide (bis-2,4-pentan dionate), zirconium diisopropoxide bis (2,2,6,6 and -tetra-methyl- 3,5-heptane dionate), zirconium dimethacrylate dibutoxide, zirconium hexafluoropentan dionate, zirconium methacryloxyethyl acetoacetate tri n-propoxide, zirconium 2,4-pentane dionate, zirconium 2,2,6,6-tetramethyl-3,5-heptane dionate, zirconium trifluoropentane dionate, and the like.

Further, examples of aluminum alkoxide include aluminium (III)n-butoxide, aluminium (III)s-butoxide, aluminium

(III)t-butoxide, aluminium (III) ethoxide, aluminium (III) iso propoxide, aluminium (III)s-butoxide bis (etthylacetoacetate), aluminium (III) di-s-butoxide ethyl acetoacetate, aluminium (III) diiso propoxide ethylacetoacetate, aluminium (III) ethoxy ethoxy ethoxide, aluminium hexafluoropentadionate, aluminium (III)3-hydroxy-2-methyl-4-pironate, aluminium (III)9-octadecenyl acetoacetate diiso propoxide, aluminium (III)2,4-pentane dionate, aluminium (III) phenoxaid, and an aluminium (III)2,2,6,6-tetra-methyl- 3,5-heptane dionate.

Examples of other organometallic compounds, include niobium isopropoxide, antimony ethoxide, arsenic triethoxide, barium 2,2,6,6-tetramethylheptane dionate, beryllium acetylacetonato, bismuth hexa fluoropentane dionate, dimethylcadmium, a calcium 2,2,6,6-tetramethylheptane dionate, chromium trifluoropentane dionate, cobalt acetylacetonato, copper hexafluoropentane dionate, magnesium hexafluoro pentane dionate dimethyl ether complex, gallium ethoxide, tetraethoxy germane, tetra methoxy germane, hafnium t-butoxide, hafnium ethoxide, indium acetylacetonato, indium 2,6-dimethylamino heptane dionate, ferrocene, lanthanum isopropoxide, lead acetate, tetraethyl lead, neodymium acetyl acetonate, platinumhexafluoropentane dionate, trimethyl cyclopentadienyl platinum, rhodium dicarbonyl acetylacetonato, strontium 2,2,6,6-tetramethylheptane dionate, tantalum methoxide, tantalum trifluoroethoxide, tellurium ethoxide, tungsten ethoxide, vanadium triiso propoxideoxide, magnesiumhexafluoro acetylacetonato, zinc acetylacetonato, diethyl zinc, and the like.

The metallic compounds may be selected in such a way that fine particles forming a metal oxide semiconductor layer (a semiconductor porous film layer) of an electric generating layer mentioned later and the inter layer become the same kind of metal oxide. However, in order to design optimally the conduction band level of a semiconductor and the flat band potential of the surface, the semiconductor porous layer and the interlayer differ may differ in composition, and further, the interlayer may include two or more kinds of metal oxides mixed simultaneously or metal oxides doped with a metal element.

Next, the following description is made about a solvent employed in the case where a conductive substrate is immersed in a solution of a metal compound in the abovementioned first way (1). The solvent is used to mix respective components in the solution and to prepare solid components of a composition relating to the present invention, in addition, the solvent is used to make the composition adaptable to various coating methods and to improve the dispersion stability and preservation stability of the composition.

As far as the above purposes can be attained, these solvents are not restricted specifically. Examples of these solvents include water and organic solvent with high miscibility with water.

Examples of the organic solvent include tetrahydrofuran, dimethoxyethane, formic acid, acetic acid, methyl acetate, alcohols (methanol, ethanol, n-propyl alcohol, iso-propyl alcohol, and tert-butyl alcohol), ethylene glycol, diethylene glycol, triethylene glycol, ethylene-glycol-monobutyl-ether, acetone, N, and N-dimethylformamide, N, and N-dimethylacetamide, dimethyl sulfoxide, and the like. In the present invention, the concentration of the metal compound solution at the time of a conductive substrate being immersed therein can be appropriately adjusted in the range of 1 $\mu$M to 1M (M represents mol/liter), and is preferably 1 to 100 mM, and more preferably 10 to 80 mM.

In the present invention, as a method of coating a surface of the conductive material surface with a metal compound, any one of coating methods, such as a spray method, a roll coating method, a die coating method, a blade coating method, and a dip coating method, may be employed. However, for coating a surface of a conductive substrate, a dip coating method is desirable.

In the present invention, after the treatment with the metal compound, it is desirable to provide a drying process. The drying method is not restricted specifically, and as far as a solvent or dispersion medium of the metallic compound can be removed, the temperature and the process are not limited. Although, the drying temperature is not limited, it is preferably 180 °C or less, more preferably 30 to 150 °C, and still more preferably 50 to 130 °C, and a method raises the temperature gradually from a low temperature is preferable, because a stable surface coating layer can be formed.

In the abovementioned second way (2), It is desirable to make a metal compound being a raw material component into form gas or mist so as to increase reactivity by a means for making a metal compound into gas or mist. The gas or mist is used such that in (I) a first process, the gas or mist is mixed with a carrier gas or a conductive gas, then, the resultant mixed gas is fed directly to a plasma reaction space, and plasma is generated under the atmosphere of the presence of a material in the plasma reaction space so as to form an interlayer on the material; and in (II) a second process, the gas or mist is mixed with a carrier gas or a conductive gas, then, raw material plasma is generated with the resultant mixes gas between electrodes, and the raw material plasma is sprayed on a conducive substrate so as to form an interlayer. The above both first and second processes can be preferably employed in the present invention.

The atmosphere gas may contain gases, such as oxygen, methane, carbon dioxide, nitrogen (except in the case of nitrogen atmosphere gas), ammonia, and hydrogen. In the case of processing a porous layer relating to the present invention, it is more preferable to make the atmosphere gas to contain 1 ppm to 30% (volume ratio) of oxygen gas with an inert gas. It may be considered as the reason that the oxygen atom radical generated by the plasma promotes the formation of metal oxides.

In order to generate the plasma, it is necessary to cause electric discharge under the atmosphere of an inert gas, and herein examples of the inert gas include the elements of the eighteenth group in periodic chart, specifically,

helium, neon, argon, krypton, xenon, and radon, and preferable examples include argon and helium, in addition, it is preferable under a nitrogen gas atmosphere. In the present invention, these gases may be used as a mixture of two or more kinds, and it may be preferable to contain components which allow at least the abovementioned raw materials to become plasma state and to form an interlayer on a surface of a conductive substrate.

It is desirable from a viewpoint of productivity to conduct the plasma treatment relating to the present invention under an atmospheric pressure or a pressure almost near the atmospheric pressure, and the pressure is preferably 1 Pa to 1 Spa, and the atmospheric pressure is more preferable from workability.

When the plasma treatment is conducted under an atmospheric pressure, a starting voltage may rises. Therefore, in order to suppress the starting voltage, it is preferable to insert a dielectric substance between discharge electrodes, to use helium, argon, or nitrogen as a atmosphere gas, and to use an alternating current or a high frequency current as a power source.

As a frequency, 1 kHz to 1 GHz is desirable. Although an electric power to be applied may differ depending on the thickness, composition and surface characteristics of a porous layer, it is necessary to optimize conditions. Accordingly, it may be preferable to perform electric discharge treatment by the use of an electric power in the range of from 0.01 to 10 W/cm$^2$ for a range for 0.1 second to several tens of seconds. If the applied power is too high, a surface smoothness may be deteriorated, and problems, such as pollution due to scattering substances caused by electric discharge, may occur. Accordingly, caution is required for a power to be applied.

An example of an atmospheric plasma processing apparatus which can be used in the present invention will be explained with reference to Fig. 2 and Fig. 3.

In Fig. 2, a plasma discharge processing apparatus 10 comprises opposite electrodes composed of a first electrode 11 and a second electrode 12, and between the above opposite electrodes, a first high-frequency electric field with a frequency ω1, an electric field intensity V1, and an electric current I1 is formed by the first electrode 11, and a second high-frequency electric field with a frequency ω2, an electric field intensity V2, and an electric current I2 is formed by the second electrode 12. The first power source 21 achieves the formation of the high-frequency electric field strength (V1 > V2) which is higher than that of second power source 22, while the first power source 21 applies the first frequency ω1 which is lower than the second frequency ω2 of the second power source 22.

Between the first electrode 11 and the first power source 21, arranged is the first filter 23 which is designed in such a manner that the electric current from the first power source 21 to the first electrode 11 is made to flow easily, while the electric current from second power source 22 is grounded, so that the electric current from second power source 22 to first power source 21 is made not to flow easily.

Further, between the second electrode 12 and the second power source 22, arranged is the second filter 24 which is designed in such a manner that the electric current from second power source 22 to the second electrode is made to easily flow, while the electric current from first electrode 21 is grounded, so that the electric current from first electric power 21 to the second power source is made to not flow easily.

Gas G is introduced into a space (a discharge space) 13 between the opposite electrodes composed of the first electrode 11 and the second electrode 12 from the gas feeding means as shown in Fig. 3 mentioned later. A high-frequency electric field is applied by the first power source 21 and the second power source 22 so as to cause discharging. As a result, while the gas G is being made in a plasma state, the resultant gas is blown out in a jet form onto the beneath (lower side of the drawing) of the opposite electrodes, so that the processing space formed between the bottom surface of the opposite electrodes and a substrate F is filled with gas G° in the plasma state. Subsequently, the gas becoming the plasma state is blown onto a surface of a conductive substrate in the vicinity of the processing position 14 so that an interlayer is formed on the substrate F which is conveyed from a previous process.

Further, in the preferable embodiment of the present invention, it may be possible to employ a means to make the reactive gas existing in the vicinity of the processing position 14 to be directly excited in the chamber so as to become plasma state and to form an interlayer on the surface of the conductive substrate. During the plasma discharge processing, the electrodes may be heated or cooled with a media fed through a pipe from the electrode temperature regulating means as shown in Fig. 3 mentioned below. Depending on the temperature of the substrate at the time of the plasma discharge processing, the physical properties and compositions of the obtained thin film may vary. Accordingly, in order to counter these variations, it is preferable to control the temperature appropriately. As a temperature controlling media, preferably employed are insulation materials such as distilled water or oil. During the plasma discharge processing, it is preferable that the temperature of the insides of the electrodes are controlled to be uniform so as to prevent non-uniform temperature from taking place in the lateral and longitudinal directions of the substrate.

Fig. 3 is an example of an apparatus which conducts plasma processing with a so-called roll-to-roll technique applicable to a conveying process of a film substrate. In Fig. 3, the atmospheric plasma processing apparatus 30 is an apparatus comprising an electric field applying means 40 having two electric power sources, a gas feeding means 50 and an electrode temperature controlling means 60.

Hereafter, a substrate F is a substrate on which a conductive substrate is formed.

Into a discharge space 32 (a space between opposite electrodes) between a roll-shaped electrode (first electrode) 35 and a plurality of square tube type fixed electrodes (second electrode) 36, a mixed gas G of a gas of organometal compounds fed from a gas feeding means 50 and/or oxygen gas, and a discharge gas such as nitrogen is fed and activated and introduced on a substrate F.

The atmospheric pressure plasma discharge processing apparatus is designed such that in the discharge space 32 formed between the roll-shaped rotating electrode (first electrode) 35 and the square tube type electrodes (second electrode) 36, the first high-frequency electric field with a frequency ω1, an electric field strength V1 and an electric current I1 is applied from the first power source 41 to the roll-shaped rotating electrode (first electrode) 35, and the second high-frequency electric field with a frequency ω2, an electric field strength V2 and an electric current I2 is applied from the second power source 42 to the square tube type electrodes (second electrode) 36.

A first filter 43 is arranged between the roll-shaped rotating electrode (first electrode) 35 and the first power source 41, and the first filter 43 is designed such that the electric current from the first power source 41 to the first electrode is made to pass easily, and the electric current from the second power source 42 is grounded so that the electric current from the second power source 42 to the first power source is made not to pass easily. Further, a second filter 44 is arranged between the fixed electrode group 36 and the power source 42, and the second filter 44 is arranged such that the electric current from the second power source 42 to the second electrode is made to pass easily, and the electric current from the first power source 41 is grounded so that the electric current from the first power source 41 to the second power source is made not to pass easily.

In the present invention, the roll-shaped rotating electrode 35 may be employed as the second electrode, and the square tube type electrode group 36 may be employed as the first electrode. In any case, the first electrode is connected to the first power source, while the second electrode is connected to the second power source. It is preferable that the first power source is adapted to form a high-frequency electric field strength ($V1 > V2$) higher than that of the second power source. Further, the first power source has a capability to make a frequency to be $\omega1 < \omega2$.

Further, it is preferable that electric current 11 < electric current I2. The electric current I1 of the first high-frequency electric field is preferably from 0.3 to 20 mA/cm$^2$, and is more preferably 1.0 to 20 mA/cm$^2$. Further, the electric current I2 of the second high-frequency electric field is preferably from 10 to 100 mA/cm$^2$, and is more preferably 20 to 100 mA/cm$^2$.

The reactive gas G generated by the gas generating apparatus 51 in the gas feeding means 50 is subjected to a flow rate control, and then is introduced into the atmospheric plasma processing chamber 31 through a gas feeding port 52.

The substrate F is unwound from the source roll (not shown), and is conveyed, or conveyed from the previous process, and the substrate F passes a guide roller 64 in such a way that air accompanying on the substrate F is blocked with a nip roller 65, and then, the substrate F is conveyed among the square tube type electrodes 3 6 while being brought in contact with the roll-shaped rotating electrode 35 and wound. During the conveyance, the electric fields are applied from both of the roll-shaped rotating electrode (first electrode) 35 and the square tube type electrodes (second electrode) 36 such that discharge plasma is generated in the space between the opposite electrodes (discharge space) 32. While the substrate F is brought into contact with the roll-shaped rotating electrode 35 and is wound, the substrate F is processed by the gas in the plasma state. After having passed through the nip roller 66 and the guide roller 67, the substrate F is wound by a winding machine (not shown), or conveyed to the following process.

The processed exhaust gases G' having been used to the discharge process are discharged from an exhaust gas port 53.

During the formation of a thin film, in order to heat or cool the roll-shaped rotating electrode (first electrode) 35 and the square tube type electrodes (second electrode) 36, media whose temperature is regulated by the electrode temperature regulating means 60, is fed to the both electrodes through the pipe 61 by the liquid transporting pump P such that the temperature is regulated from the inside of the electrodes.

Here, 68 and 69 are partition plates which separate the plasma discharge processing chamber 31 from the outside.

As compared with a cylinder type electrode, each square tube type electrodes 36 has an effect to expand a discharging range (discharging area), it is preferably used in the present invention.

In the case where a dielectric substance is provided on one electrode, a distance between the first electrode and the second electrode which are opposite to each other is the shortest distance between the surface of the dielectric substance and the surface of a conductive metallic substrate of another electrode.

In the case where a dielectric substance is provided to both electrodes, a distance between the first electrode and the second electrode is the shortest distance between the surfaces of the respective dielectric substances.

The distance between the electrodes is determined in consideration with the thickness of the dielectric substances provided on the conductive metallic substrates, the degree of electric field strength, and purposes to utilize plasma. However, in any case, from the viewpoint of conducting discharge uniformly, the distance is preferably 0.1 to 20 mm, and specifically preferably 0.5 to 2 mm.

As the plasma discharge processing chamber 31, a processing chamber made of a PYREX (the registered

trade name) glass is preferably employed. However, when the insulation of the electrode is established, it is possible to employ a metal chamber. For example, in the metal chamber, polyimide resins may be pasted to the inner surface of an aluminum or stainless steel frame, or ceramics may be thermally sprayed so as to establish insulation.

Hereafter, exemplified are high-frequency power sources applicable to the atmospheric plasma processing apparatus relating to the present invention.

As the first power source (high-frequency power source) arranged in the atmospheric pressure plasma discharge processing apparatus, the following are available as commercial products, and are employable.

| *1 | *2 | *3 | *4 |
|---|---|---|---|
| A1 | Shinko Electric Co., Ltd. | 3 kHz | SPG3-4500 |
| A2 | Shinko Electric Co., Ltd. | 5 kHz | SPG5-4500 |
| A3 | Kasuga Electric Work Ltd. | 15kHz | AGI-023 |
| A4 | Shinko Electric Co., Ltd. | 50 kHz | SPG50-4500 |
| A5 | Haiden Laboratory, Inc. | 100 kHz* | PHF-6k |
| A6 | Pearl Kogyo Co., Ltd. | 200 kHz | CF-2000-200k |
| A7 | Pearl Kogyo Co., Ltd. | 400 kHz | CF-2000-400k |

*1: Power Source No., *2: Manufacturer, *3: Frequency
*4: Trade Name

Further, as the second power source (high-frequency power source), the following are available as commercial products, and are employable.

| *1 | *2 | *3 | *4 |
|---|---|---|---|
| B1 | Pearl Kogyo Co., Ltd. | 800 kHz | CF-2000-800k |
| B2 | Pearl Kogyo Co., Ltd. | 2 MHz | CF-2000-2M |
| B3 | Pearl Kogyo Co., Ltd. | 13.56 MHz | CF-5000-13M |
| B4 | Pearl Kogyo Co., Ltd. | 27 MHz | CF-2000-27M |
| B5 | Pearl Kogyo Co., Ltd. | 150 MHz | CF-2000-150M |

*1: Power Source No., *2: Manufacturer, *3: Frequency
*4: Trade Name

Among the above power sources, the power source provided with asterisk mark * is a high-frequency power source (100 kHz in a continuous mode) manufactured by Haiden Laboratory, Inc.

Other power sources are a high-frequency power source capable of applying only continuous sine waves.

In the present invention, it is preferable in the atmospheric pressure plasma discharge processing apparatus to employ electrodes capable of maintaining a uniform and stable discharge state by forming such electric fields.

In the present invention, as an electric power applied between the opposite electrodes, an electric power (output density) of 1 W/cm$^2$ or more is fed to the second electrode (the second high-frequency electric field) so as to excite discharge gases and to cause plasma, whereby energy is provided to thin film forming gases and a thin film is formed.

The upper limit of the electric power fed to the second electrode is preferably 50 W/cm$^2$, and more preferably 20 W/cm$^2$. The lower limit is preferably 1.0 W/cm$^2$. Here, a discharge area (cm$^2$) refers to an area in a range in which discharging occurs between the electrodes.

Further, by also feeding an electric power (output density) of 1 W/cm$^2$ or more to the first electrode (the first high-frequency electric filed), it becomes possible to increase the output density while maintaining the uniformity of the second high-frequency electric field.

With this, it is possible to produce plasma with more uniform and high density. As a result, it becomes possible to satisfy both to increase the film production rate and to improve film quality. The electric power is preferably 5 W/cm$^2$ or more.

The upper limit of the electric power fed to the first electrode is preferably 50 W/cm$^2$.

Here, the waveform of ahigh-frequency electric field is not particularly limited. The waveform includes a sine wave continuous oscillation mode called a continuous mode and an intermittent oscillation mode called a pulse mode which conducts ON and OFF intermittently. Any one of them may be employed. However, it is preferable that a continuous sine wave is applied at least for the second electrode side (the second high-frequency electric field), because a dense and high quality film can be obtained.

The atmospheric plasma processing apparatus shown in Fig. 3 is an apparatus comprising an electrode temperature control means 60. In order to obtain a uniform layer quality for the interlayer of the present invention, it may be preferable to conduct the processing while controlling precisely the temperature of the roll-shaped rotating electrode (first electrode) 3 5 by the use of the electrode temperature control means 60.

The temperature of the roll-shaped rotating electrode (first electrode) is made preferably to 50 °C or more, more preferably to 70 °C or more, and most preferably to 90 °C or more.

The plasma irradiation time can be controlled by the conveying speed of the substrate F, that is, the conveying speed is adjusted appropriately in accordance with the irradiation time. The irradiation time is preferably 0.1 seconds to 100 seconds, more preferably 0.2 seconds to 30 seconds, and most preferably 0.5 seconds to 20 seconds. In the case where a desired thickness of the interlayer is not obtained within the preferable irradiation time, when the interlayer is formed with the increased number of paths, the interlayer with the uniform thicker thickness can be formed.

<Conductive substrate>

The dye-sensitized type solar cell of the present invention comprises a conductive substrate including a current-collecting grid made of a metal (hereafter, also referred to as a metallic current collecting layer) on a light transmissive substrate.

(Current collecting layer)

The form of a metallic current-collecting layer composed of metallic thin wires is not limited specifically, and the metallic current-collecting layer may be formed in a net shape, a stripe shape, or an arbitral pattern shape. The material of metallic thin wires is also not limited specifically, and a metal, such as gold, silver, copper, platinum, aluminium, nickel, tungsten, indium, and ruthenium, an alloy containing plural kinds of these metals, a stainless steel, or the like may be selected arbitrarily and employed. Specifically, from the viewpoints of conductivity and easiness in producing thin wires, gold, silver, and copper may be employed as a preferable embodiment.

The wire width of metallic thin wires and the air gap ratio of a metallic current-collecting layer are not limited specifically. They can be controlled arbitrary and applied. When the wire width becomes small, the conductivity will be decreased, but an air gap ratio becomes high. As a result, the light transmittance as a conductive substrate becomes high. On the other hand, when the wire width becomes large, the conductivity will be increased, but an air gap ratio becomes low. As a result, the light transmittance as a conductive substrate becomes low.

When these viewpoints are taken into consideration, the wire width of a metallic thin wire is specifically preferable to be from 5 μm to 20μm, and it is more preferable to be from 5 μm to 10μm. Measurement of the wire width of a metallic thin wire can be performed using a microscope with a distance measuring function.

An air gap ratio of metallic current collecting layer is specifically preferably from 93% to 98%, and it is more preferably from 95% to 98%. Here, the air gap ratio means a ratio of the area obtained by deducting the area occupied by the metal wires from the whole area to the whole area on the transparent conductive substrate irradiated with light, and is represented by the following formula.

$$(\text{Air gap ratio}) = \{(\text{whole area}) - (\text{area occupied by metal thin wires})\} / (\text{whole are}) \times 100$$

The air gap ratio can be obtained by the analysis of images photographed with a microscope and by measuring the area of aperture sections (pore sections).

Moreover, the interval of metal thin wires is also a factor which influences an air gap ratio, and it is possible to set up it arbitrarily. Usually, it can be set in the range of 10 μm to 500 μm. Further, although the height of metallic thin wires is not limited specifically, when the conductivity and surface smoothness of the conductive substrate are taken into consideration, the height is preferably from 1 μm to 20 μm, and more preferably from 5 μm to 15 μm.

Next, the following explanation will be made about a method of form a metallic current-collecting layer composed of metal thin wires on a transparent substrate.

The method of forming metal thin wires is not limited specifically, and employed may be arbitrary methods, such as a vacuum deposition method, a sputtering process, an ion plating method, a CVD method, a plasma CVD method, a coating method, an ink-jet method, a screen printing, an aerosol deposition method, a silver salt method and various etching methods. Among these methods, from a point of easiness in patterning, it is preferable to employ various printing methods, an ink-jet method, a screen printing method or a silver salt method.

More specifically, metal thin wires may be formed by the following ways. A photoresist is coated on a transparent substrate, and then a pattern light exposure is performed through a mask on the photoresist, followed by etching to remove a part corresponding to a metal thin wire pattern on the photoresist. Subsequently, after the above-mentioned

metallic film is formed uniformly by sputtering for example, the photoresist is removed by the lift-off method, whereby a metal thin wire can be formed. Alternatively, after a metallic film is formed uniformly on the above-mentioned substrate, then a photoresist is coated to this metallic film and a pattern light exposure is conducted on the photoresist through a mask. Subsequently, positive parts of the photoresist are dissolved, and the appeared metallic film is removed by etching, whereby metal thin wires can be formed.

The following methods can be employed as the coating method. Metal particles which become metallic thin wires and glass particles which become a binder are blended to form a paste. Then, the paste is coated so as to form a prescribed pattern by a method such as a coating method, various printing methods, an ink-jet method and a screen printing. Thereafter, the coated layer is heated, and calcined to melt the metallic particles. As a calcined temperature, for example, when a transparent substrate is a glass, it is preferable to make the calcined temperature 600 °C or less.

Various well-known methods may be employed as an ink-jet method. Especially, the electrostatic ink-jet method can continuously print the liquid of high viscosity with high precision. Therefore, it is preferably used for forming metal thin wires. For forming metal thin wires, it is preferable to use a liquid jetting apparatus which comprises a liquid jetting head having nozzles with an inner diameter from 0.5 to 30μm to jet electrically charged liquid, a supply means to feed a solution in the above-mentioned nozzles, and a jetting voltage applying means to apply a jetting voltage to the solution in the above-mentioned nozzles. According to this method, metal thin wires do not become fat due to crossing, so that it is possible to make metal wires thin.

As specific methods for forming metal thin wires by the use of such an electrostatic ink-jet method, employed may be, for example, a method of forming metal thin wires by an electroless plating after coating a plating catalyst ink so as to form a predetermined pattern; a method of coating an ink containing metal particles, or an ink containing metal ions or metal complex ions and a reducing agent so as to form a predetermined pattern; and a method of coating an ink containing metal ions or metal complex ions and an ink containing a reducing agent thorough different nozzles so as to form a predetermined pattern.

Especially, preferable are a method of coating an ink containing metal particles, or a ink containing metal ions or metal complex ions and a reducing agent so as to form a predetermined pattern and a method of coating an ink containing metal ions or metal complex ions and tan ink containing a reducing agent thorough different nozzles so as to form a predetermined pattern, because these methods do not need additional processes such as a plating method. Furthermore, most preferably employed is a method of coating an ink containing metal ions or metal complex ions and a reducing agent or a method of coating an ink containing metal ions or metal complex ions and an ink containing a reducing agent thorough different nozzles so as to form a predetermined pattern. The reason is that as compared with a method of coating an ink containing metal particles, since the above methods hardly cause convexo-concave on metal thin wire surfaces, these methods can be employed for the use application in which smoothness is required.

The viscosity of the ink used in the electrostatic ink-jet method is preferably 30 mPa·s or more, and more preferably, it is 100 mPa·s or more.

Next, a silver salt method will be described.

In a silver salt method, a layer containing a silver halide grain is provided on a transparent substrate, and light exposure with a predetermined pattern and developing treatment are conducted on the layer so as to form metallic silver portions with a required pattern, thereafter further a physical development process is conducted for the portions, whereby silver thin wires are formed. The silver salt method hardly causes the lowering of the air gap ratio which is a problem in a printing method and is caused by wires becoming fat due to crossing, and the silver salt method can form silver dense lines. Therefore, the application of the silver salt method is one of the preferable embodiments.

When the layer containing the above-mentioned silver halide grain is formed, a binder is contained in a silver halide emulsion. An amount of the binder in the layer containing a silver halide grain is preferably from 0.05 $g/m^2$ to 0.25 $g/m^2$. A ratio of Ag/binder in the layer containing a silver halide grain is preferably from 0.3 to 0.8 as a volume ratio. The above-mentioned silver halide grain is preferably silver chlorobromide particles. The silver chloride content is preferably from 55 mol% to 95 mol%, and the silver bromide content is preferably from 5 mol% to 45 mol%.

With regard to details of light exposure, developing treatment and physical development treatment, the methods described in Japanese Unexamined Patent Publication No. 2006-352073 may be referred to.

After metallic thin wires were formed on a transparent substrate by the various methods described above, if needed, plating treatment may be conducted on the metallic thin wires, or a corrosion prevention layer for preventing corrosion by an electrolyte may be provided to the metallic thin wire. In the case of applying the plating treatment, the plating treatment may be conducted under arbitrary conditions by the use of an electrolytic plating method or an electroless plating method. In the case of providing a corrosion prevention layer, it is possible to apply metal such as titanium, nickel, and aluminum, or these alloys, and it is also possible to apply an amorphous or crystalline insulating layer as a corrosion prevention layer.

In the present invention, in a configuration that the abovementioned current collecting grid is provided on a light transmissive substrate, it is more desirable to structure to cover aperture sections on the current collecting grid with a transparent conductive layer.

(Transparent conductive layer)

As a conductive material used for this transparent conductive layer, employed may be every material, such as inorganic type conductive materials composed of well-known various metals, metal oxides, etc.; polymer type conductive materials; inorganic-organic composite type conductive material; carbon type materials, and conductive materials in which these materials are mixed arbitrarily. As the transparent conductive layer of the present invention, preferably employed is a material having a function of a protective layer to protect the corrosion of a current collecting grid caused by iodine redox contained in an electrolyte layer in addition to a function to receive electrons injected from a semiconductor porous film.
Specific examples of inorganic type conductive materials include metals such as platinum, gold, silver, copper, zinc, titanium, aluminium, rhodium, and indium; conductive carbon; and further metal oxides, such as tin-doped indium oxide (ITO), tin oxide ($SnO_2$), fluorine-doped tin oxide (FTO), antimony-doped tin oxide (ATO), zinc oxide ($ZnO_2$) niobium-doped titanium oxide (Nb-$TiO_2$) and the like. Among these inorganic type conductive materials, a metal oxide type covering layer is preferable from a viewpoint of corrosion resistance, because iodine is used for an electrolyte layer due to the reason of the structure of a dye-sensitized type solar cell.
Specific examples of polymer type conductive materials include conductive polymers produced by polymerization of thiophene, pyrrole, furan, aniline, etc. which may be substituted or may not be substituted, polyacethylene, and the like. From the viewpoint of high conductivity, polythiophene is desirable, and specifically polyethylene dioxythiophene (PEDOT) is desirable.
As a method of forming an above-mentioned conductive covering layer, well-known suitable methods may be employed in accordance with a conductive material. For example, in the case that a conductive layer is formed with metal oxides such as ITO, employed may be thin film forming methods, such as a sputtering method, a CVD method, a SPD method (a spray pyrolysis depositing method), and a vapor deposition method. Further, in the case where a conductive covering layer is formed with a polymer type conductive material, preferably employed may be well-known various coating methods.
The thickness of the conductive covering layer is preferably about 0.01 $\mu$m to 5 $\mu$m, and more preferably about 0.05 $\mu$m to 2.0 $\mu$m.
The surface resistance value in the light transmissive conductive substrate of the present invention is preferably 10 Ω/□ or less, more preferably 1 Ω/□ or less, and specifically preferably 0.5 Ω/□ or less. The above surface resistivity may be measures, for example, based on JIS K6911 or ASTM D257. Further, it is also possible to conveniently measure the surface resistivity with a commercially available surface resistivity meter.

(Light transmissive substrate)

A glass plate and a resin film may be used as a light transmissive substrate used for a conductive substrate in the dye-sensitized solar cell of the present invention.
Specific examples of the resin film include polyester such as polyethylene terephthalate (PET) and polyethylene naphthalate; polyolefin such as polyethylene (PE), polypropylene (PP), polystyrene and cyclic olefin resin; vinyl resin such as polyvinylchloride and polyvinylidene chloride; polyether ether ketone (PEEK), polysulfone (PSF), polyethersulfone (PES), polycarbonate (PC), polyamide, polyimide, acrylic resin and triacetyl cellulose (TAC).
Among them, from the viewpoints of transparency, heat resistivity, the ease of handling and cost, preferable are a biaxially stretched polyethylene terephthalate film, an acrylic resin film and a triacetyl cellulose film. Most preferable is a biaxially stretched polyethylene terephthalate film.

<Semiconductor porous film layer>

The semiconductor porous film layer relating to the present invention will be explained.
As a semiconductor which constitutes the semiconductor porous film layer relating to the present invention, as far as a semiconductor receives electrons generated by adsorbed-dyes in response to light exposure and transmits these electrons to a conductive substrate, such a semiconductor is not limited specifically, and various metal oxides capable of being used for a well-known dye-sensitized solar cell may be employed.
Specific examples of the metal oxide include various metal oxide semiconductors such as titanium oxide, zirconium oxide, zinc oxide, vanadium oxide, niobium oxide, tantalum oxide and tungsten oxide; various composite metal oxide semiconductors such as strontium titanate, calcium titanate, magnesium titanate, barium titanate, potassium niobate and strontium tantalate; transition metal oxides such as magnesium oxide, strontium oxide, aluminium oxide, cobalt oxide, nickel oxide and manganese oxide; metal oxides such as cerium oxide, gadolinium oxide, samarium oxide and a lanthanoid oxide such as ytterbium oxide; and inorganic insulators represented by silica, such as a natural silica compound and a synthetic silica compound. These compounds may be used in combination thereof Furthermore, it is

possible to make a metallic oxide particle into a core-shell structure, to dope a different metallic element, and to to apply a metal oxide having an arbitral structure and composition.

The average grain diameter of metallic oxide particles is preferably from 10 nm to 300 nm, and it is more preferably from 10 nm to 100 nm. The form of a metal oxide is not limited specifically, and the form may be any one of a globular, a needlelike, or an amorphous crystal.

The forming method of metal oxide particles is not limited specifically. The metal oxide particles may be formed by the use of various liquid phase methods such as a hydrothermal reaction method, a sol-gel method/ a gel-sol method, a colloid chemical synthetic method, a coating thermal decomposition method and a spraying thermal decomposition method; and various gaseous phase methods such as a chemical vapor deposition method.

Next, the production methods of the metal oxide semiconductor layer relating to the present invention will be described.

Well-known methods may be employed as the production method of the metal oxide semiconductor layer in the dye-sensitized solar cell of the present invention, and for example, employable are (1) a method of coating a suspension containing metal oxide particles or their precursor on a conductive substrate, and drying and calcining the coating layer so as to form a semiconductor layer; (2) a migration electrodeposition method of immersing a conductive substrate into a colloidal solution such that metal oxide semiconductor particles are deposited on the conductive substrate by electrophoresis; (3) a method of coating a mixture of a colloid solution or a colloid dispersion with a foaming agent and sintering the coating layer so as to form a porous material; and (4) a method of coating a mixture of polymer micro beads and conducting a heat treatment or a chemical treatment to remove these polymer micro beads so as to form air gaps or voids, thereby make the coating layer porous.

In the above production methods, well-known methods may be employed as the coating method, and employed may be, for example, a screen printing, an ink-jet method, a roll coat method, a doctor blade method, a spin coat method and a spray coating method.

Especially, in the case of the above method (1), the particle diameter of the metal oxide particles in the suspension is preferably minute, and it is preferable that the metal oxide particles exist as primary particles. The suspension containing metal oxide particles is prepared by dispersing metal oxide particles in a solvent. As a solvent, as far as a solvent can disperse metal oxide particles, such a solvent is not limited specifically. Employable are water, an organic solvent and the mixed liquid of water and an organic solvent. Examples of the organic solvent, include alcohols such as methanol and ethanol; ketones such as methyl ethyl ketone, acetone and acetylacetone hydrocarbons; and hydrocarbons such as hexane and cyclohexane. Into the suspension, a surfactant and a viscosity modifier (a polyhydric alcohol such as polyethylene glycols) can be added if needed. The range of the concentration of the metal oxide particles in the solvent is preferably 0.1 to 70 weight%, and more preferably 0.1 to 30 weight%.

After the suspension containing the core particles of the metal oxide obtained by the above-described method was coated on a conductive substrate and the coating layer was dried, the coating layer is calcined in air or in an inert gas so that a metal oxide semiconductor layer is formed on the conductive substrate. The semiconductor layer obtained by coating and drying the suspension on the conductive substrate is composed of an aggregate of metal oxide particles, and the particle diameter of the particles is equivalent to the primary particle diameter of the used metal oxide particles. The metal oxide semiconductor layer formed on the conductive substrate has a weak bonding strength with the conductive substrate, the bonding strength between particles is also weak, and mechanical strength is weak. Therefore, it is preferable to conduct calcination treatment to this metal oxide particle aggregate film so as to raise mechanical strength, and to make the film strongly fixed to the substrate.

In the present invention, although this metal oxide semiconductor layer may have any kinds of structure, it is preferable that the layer is a porous structure film (with voids or it is also called a porous layer). The porosity of the metal oxide semiconductor layer is preferably from 0.1 to 20 volume%, and more preferably from 5 to 20 volume%. Here, the porosity of the metal oxide semiconductor layer indicates the porosity which exhibits penetration in the thickness direction of a dielectric substance, and the porosity can be measured by the use of a commercially available apparatus such as a mercury porosimeter (Porerizer 9220 type manufactured by Shimazu Co., Ltd.). The thickness of the metal oxide semiconductor layer is preferably at least 10 nm or more, and more preferably from 100 to 10000 nm.

At the time of calcination treatment, from the viewpoints of appropriately adjusting the real surface area of the semiconductor layer and to obtain the semiconductor layer having the above-mentioned porous ratio, the calcination temperature is preferably lower than 1,000 °C, and more preferably in the range of 200 to 800 °C.

In the metal oxide semiconductor layer relating to the present invention, after a metal oxide semiconductor layer was formed on a metal oxide interlayer as described above, surface treatment with a metal oxide may applied on the metal oxide semiconductor layer in order to enhance electron conductivity, if needed. As the composition of this surface treatment material, it is preferable to use the same kinds of composition as the metal oxide which forms the metal oxide semiconductor layer from the viewpoint of electron conductivity between metal oxide particles.

This surface treatment may be conducted in such a way that after a metal oxide semiconductor layer was formed on a conductive substrate, the precursor of a metal oxide becoming a surface treatment layer is coated on this

semiconductor layer, or this semiconductor layer is immersed into a solution of the precursor of a metal oxide, and then the coated or immersed semiconductor layer is subjected to calcination treatment if needed, whereby a surface treatment by the use of the metal oxide can be conducted.

Specifically, the surface treatment can be conducted by an electrochemical process with an aqueous solution of titanium tetrachloride or titanium alkoxide which is a precursor of titanium oxide; or by use of a precursor of an alkali metal titanate or an alkaline earth metal titanate. The calcination temperature and the calcination time in this case are not limited specifically, and they can be controlled arbitrarily. However, the calcination temperature may be preferably 200 °C or less.

<Dye>

The dye used for the present invention will be explained.

In the present invention, as a dye which is made to adsorb on the surface of the above-mentioned metal oxide semiconductor layer, preferably employed may be a dye which has an absorption in the range of visible light region or infrared light region and has a lowest unoccupied molecular orbital higher than the conduction band of the metal oxide semiconductor. Well-known various dyes may be employed.

Example of the dye include an azo system dye, a quinone system dye, a quinone imine system dye, a quinacridone system dye, a squarylium system dye, a cyanine system dye, a cyanidin system dye, a merocyanine system dye, a triphenylmethane system dye, a xanthene system dye, a porphyrin system dye, a perylene system dye, an indigo system dye, a phthalocyanine system dye, a naphthalocyanine system dye, a rhodamine system dye and a rhodanine system dye

Further, also a metal complex dye may be preferably emplyed. In that case, examples of the employable metal complex dye include various metals such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te and Rh.

Among the above dyes, poly methine dyes, such as a cyanine dye, a merocyanine dye and a squarylium dye, are one of preferable embodiments. Specific examples of the dyes include the dyes described in respective specifications of Japanese Unexamined Patent Publication No. (JP-A No.) 11-35836, JP-A No. 11-67285, JP-A No. 11-86916, JP-A No. 11-97725, JP-A No. 11-158395, JP-A No. 11-163378, JP-A No. 11-214730, JP-A No. 11-214731, JP-A No. 11-238905, JP-A No. 2004-207224, JP-A No. 2004-319202, European patent No. 892,411 and European patent No. 911,841.

Furthermore, a metal complex dye is also one of the desirable embodiments. A metal phthalocyanine dye, a metalloporphyrin dye, and a ruthenium complex dye may preferable. Especially preferable is a ruthenium complex dye.

Examples of a ruthenium complex dye include complex dyes disclosed in respective specifications of US Patent No. 4,927,721, US Patent No. 4,684,537, US Patent No. 5,084,365, US Patent No. 5,350,644, US Patent No. 5,463,057, US Patent No. 5,525,440, JP-A No. 7-249790, and JP-A No. 10-504512, in the pamphlet of International Publication No. WO 98/50393, and in respective specifications of JP-A No. 2000-26487, JP-A No. 2001-223037, JP-A No. 2001-226607, Japanese patent No. 3430254.

It is preferable that these dyes (compounds) have a large absorption coefficient and are stable to a repeated oxidation-reduction reaction.

It is preferable that the above dyes (compounds) chemically adsorb on a metal oxide semiconductor. It is preferable that the dyes have a functional group such as a carboxyl group, a sulfonic acid group, a phosphoric acid group, an amide group, an amino group, a carbonyl group and a phosphine group.

In order to expand a wavelength band of photoelectric conversion as much as possible and to increase conversion efficiency, two or more kinds of dyes may be used together or mixed. In this case, the dyes used together or mixed may be selected so that the target wavelength band and intensity distribution of a light source will be adjusted.

<Charge transfer layer>

A charge transfer layer is a layer containing a charge transporting material which has a function to supply electrons to oxidants of dyes. Typical examples of the charge transporting material which can be used in the present invention include an electrolytic solution, such as a solvent in which redox counter ions are dissolved, and a ambient temperature molten salt containing redox counter ions; a gel state pseudo solidified electrolyte in which a solution of redox counter ions is impregnated into a polymer matrix or a low molecular gelation agent; and a polymer solid electrolyte. Moreover, in addition to the charge transporting material to which ions relate, an electron transporting material or a positive hole (hole) transporting material may be employed as a material in which carrier migration in a solid relates to electric conduction, and these materials may also be used in combination.

When an electrolysis solution is used in a charge transfer layer, if redox counter ions to be contained in the electrolysis solution can be employed generally in well-known solar cells, such redox counter ions are not limited specifically.

Specific examples of them include composition containing redox counter ions, such as $I^-/I_3^-$ type and $Br_2^-/Br_3^-$ type; a metal redox type of metal complexes, such as a ferrocyanic acid salt/ferricyanic acid salt, ferrocene/ferricinium ion or a cobalt complex; an organic redox type, such as alkyl thiol-alkyl disulfide, a viologen dye, hydroquinone/quinone; and a sulfur compound, such as poly sodium sulfide, alkyl thiol/alkyl disulfide.

Specific examples of an iodine type include a combination of iodine with metal iodides such as LiI, NaI, KI, CsI and $CaI_2$; and a combination of a quaternary ammonium, such as tetraalkyl ammonium iodide, pyridinium iodide and imidazolium iodide and a quaternary imidazolium with iodine salts. Specific examples of a bromine type include a combination of bromine with metal bromides such as LiBr, NaBr, KBr, CsBr, and $CaBr_2$; and a combination of a quaternary ammonium compound such as tetraalkyl ammonium bromide and a pyridinium bromide with bromine salts.

A solvent is preferably a compound that is electrochemically inert and can exhibits excellent ion conductivity by improving ionic mobility with a low viscosity or by improving an effective carrier concentration with a high dielectric constant.

Specific examples of the solvent include carbonate compounds such as dimethyl carbonate, diethyl carbonate, ethylene carbonate and propylene carbonate; heterocyclic compounds such as 3-methyl-2-oxazolidine; ether compounds such as dioxane and diethyl ether; chain ethers such as ethylene glycol dialkyl ether, the propylene glycol dialkyl ether, the polyethylene glycols dialkyl ether and polypropylene glycol dialkyl ether; alcohols such as methanol, ethanol, ethylene glycol mono-alkyl ether, propylene glycol mono-alkyl ether, polyethylene glycols mono-alkyl ether and polypropylene glycol mono-alkyl ether; polyhydric alcohols such as ethylene glycol, diethylene glycol, triethylene glycol, polyethylene glycols, propylene glycol, polypropylene glycol and glycerine; nitrile compounds such as acetonitrile, glutalodinitrile, propionitrile, methoxypropionitrile, methoxyacetonitrile and benzonitrile; and aprotic polar substances such as tetrahydrofuran, dimethyl sulfoxide and sulfolane.

A preferable concentration of an electrolyte is from 0.1 to 15 M, and more preferably from 0.2 to 10 M. In the case of using an iodine type, the preferable addition concentration of iodine is from 0.01 to 0.5 M.

A molten-salt electrolyte is preferable from a viewpoint of compatibility of photoelectric conversion efficiency and durability. Examples of the molten-salt electrolyte include electrolyte containing well-known iodide salts such as pyridinium salt, imidazolium salt or triazolium salt described in a pamphlet of International Publication WO 95/18456, specification of JP-A No. 8-259543, JP-A No. 2001-357896, document of Electrochemistry, volume 65, No. 11, page 923 (1997). These molten-salt electrolytes are preferably in a molten state at normal temperature, and it is desirable not to use a solvent with them.

An electrolyte or an electrolyte solution may be used by being contained in a matrix such as an oligomer and a polymer or be being made to gel (pseudo solidified) with a technique such as polymer addition, addition of a low molecular gelation agent or an oil gelation agent, polymerization including multi functional monomers, or a cross linkage reaction of a polymer.

In the case of making into gel by addition of a polymer, polyacrylonitrile and polyvinylidene fluoride may be used especially preferably. In the case of making into gel by addition of an oil gelation agent, a desirable compound is a compound which has an amide structure in its molecular structure. Moreover, In the case of making an electrolyte into gel by a cross linkage reaction of a polymer, it is preferable to use a polymer having a cross-linkable reactive group and a crosslinking agent together. In this case, preferable examples of the cross-linkable reactive group include a nitrogen-containing heterocycle (for example, a pyridine ring, an imidazole ring, a thiazole ring, an oxazole ring, a triazole ring, a morpholine ring, a piperidine ring and a piperazine ring), and preferable examples of the crosslinking agent include a reagent having two or more functional groups capable of causing an electrophilic reaction for a nitrogen atom (for example, alkyl halide, aralkyl halide, sulfonic cid ester, acid anhydride, acid chloride and isocyanate). The concentration of the electrolyte is usually from 0.01 to 99 weight%, and preferably about 0.1 to 90 weight%.

Moreover, as a gel state electrolyte, an electrolyte composition containing an electrolyte, metallic oxide particles and/or conductive particles may also be employed. Examples of the metal oxide particles include one kind or a mixture of two or more kinds selected from a group consisting of $TiO_2$, $SnO_2$, $WO_3$, ZnO, ITO, $BaTiO_3$, $Nb_2O5$, $In_2O_3$, $ZrO_2$, $Ta_2O_5$, $Lea_2O_3$, $SrTiO_3$, $Y_2O_3$, $Ho_2O_3$, $Bi_2O_3$, $CeO_2$ and $Al_2O_3$. These may be a compound doped with an impurity, or a composite oxide. As conductive particles, a substance mainly composed of carbon may be employed.

Next, a polyelectrolyte is a solid state substance capable of dissolving a redox species or bonding with at least one substance constituting a redox species, and examples of the polyelectrolyte include high molecular compounds such as polyethylene oxide, polypropylene oxide, polyethylene succinate, poly-β-propiolactone, polyethylene imine and polyalkylene sulfide and cross-linked compounds of the above compounds; and compounds in which a polyether segment or an oligoalkylene oxide structure is added as a side chain into a polymer functional group, such as polyphosphazene, polysiloxane, polyvinyl alcohol, polyacrylic acid and polyalkylene oxide and also copolymer of the above compounds. Among them, preferable are a compound having an oligoalkylene oxide structure as a side chain and a compound having a polyether segment as a side chain.

In order to make a redox species contained into the above solid, employed may be a method of causing

polymerization under the coexistence of a monomer to become a polymer and a redox species; and a method of dissolving a solid of a polymer into a solvent as needed basis, and, subsequently, adding the above-mentioned redox species. The content of a redox species may be suitably selected in accordance with a required ionic-conductive property.

In the present invention, in place of the ion conductive electrolyte, such as a molten-salt, employed may be a solid hole transport material of an organic compound or an inorganic compound or a combination ofboth of them. Examples of the organic hole transport material include conductive polymers, such as aromatic amines, triphenylene derivative, polyacethylene and its derivative, poly (p-phenylene) and its derivative, poly (p-phenylenevinylene) and its derivative, polythenylene vinylene and its derivative, polythiophene and its derivative, polyaniline and its derivative, and polytoluidine and its derivative.

In a positive hole (hole) transport material, in order to control a dopant level, added may be a compound containing a cation radical such as tris(4-bromophenyl) aluminium hexachloroantimonate, or, in order to conduct potential control (compensation of a space charge layer) of a surface of an oxide semiconductor, added may be a salt such as $Li[(CF_3SO_2)_2N]$. A "p" type inorganic compound semiconductor may be used as an inorganic hole transport material.

The "p" type inorganic compound semiconductor used for this purpose has preferably a band gap of 2 eV or more, and more preferably a band gap of 2.5 eV or more. Further, the ionization potential of a "p" type inorganic compound semiconductor is required to be smaller than the ionization potential of a dye adsorbing electrode in view of the condition to reduce the positive hole of the dye. Although the preferable range of the ionization potential of a "p" type inorganic compound semiconductor may change depending on a dye to be used, generally, the range is preferably from 4.5 to 5.5 eV, and more preferably from 4.7 to 5.3 eV. A preferable "p" type inorganic compound semiconductor is a compound semiconductor containing a univalent copper, preferably CuI and CuSCN, and most preferably CuI. A preferable hall mobility in the charge transfer layer containing a "p" type inorganic compound semiconductor is $10^{-4}$ to $10^4$ $m^2/V \cdot sec$, and more preferably $10^{-3}$ to $10^3$ $m^2/V \cdot sec$. Further, a preferable electric conductivity of a charge transfer layer is from $10^{-8}$ to $10^2$ S/cm, and more preferably from $10^{-6}$ to 10 S/cm.

In the present invention, a method of forming a charge transfer layer between a semiconductor electrode and an opposite electrode is not limited specifically. However, employed may be, for example, a method of arranging a semiconductor electrode and an opposite electrode so as to opposite to each other and then filling up with the above-mentioned electrolytic solution or various electrolytes between the semiconductor electrode and the counter electrode, thereby forming a charge transfer layer; and a method of dropping or coating the electrolytic solution or various electrolytes on the semiconductor electrode or on the opposite electrode so as to form a charge transfer layer, and then piling up the other electrode on the charge transfer layer.

In order to prevent a leak of an electrolyte from between a semiconductor electrode and a opposite electrode, it may be preferable to seal a space between the semiconductor electrode and the opposite electrode by the use of a film or a resin as needed, or it may be also preferable to accommodate the semiconductor electrode, the charge transfer layer and the opposite electrode in a suitable case.

In the former forming method, as a process of filling up a charge transfer layer, employed may be a normal pressure process of utilizing a capillary phenomenon by immersion, or a vacuum process of causing a lower pressure than a normal pressure and replacing a gas phase in a space with a liquid phase.

In the latter forming method, as the coating method, employed may be, for example, a micro gravure coating, a dip coating, a screen coating and a spin coating. In a wet type charge transfer layer, an opposite electrode is provided under an undried condition, and then a liquid leakage prevention measure is applied to edge portions. Further, in the case of a gel electrolyte, employed may be a method of coating an electrolyte with a wet process, and then solidifying the electrolyte by polymerization. In this case, an opposite electrode may be provided after the electrolyte was dried and solidified.

In the case of a solid positive hole (hole) transporting material or a solid electrolyte, a charge transfer layer may be formed by a dry film forming process such as a vacuum deposition process and a CVD process, and thereafter an opposite electrode may be provided to it. Specifically, the above solid material may be introduced into the inside of an electrode with a method, such as a vacuum deposition method, a cast method, a coating method, a spin coat method, a dip coating method, an electro-polymerization method and an optical electro-polymerization method, and a substrate is heated at an optional temperature, if needed, so as to evaporate a solvent, thereby forming a charge transfer layer.

The thickness of the charge transfer layer is preferably 10 μm or less, more preferably 5 μm or less, and still more preferably 1 μm or less. The electric conductivity of the charge transfer layer is preferably $1 \times 10^{-10}$ S/cm or more, and more preferably $1 \times 10^{-5}$ S/cm or more.

<Cathode electrode>

As a cathode electrode (opposite electrode) which can be used in the present invention, utilized may be a single layer of a substrate having in itself conductivity as with the abovementioned conductive substrate, or a substrate on which a conductive layer is provided. In the latter case, as a conductive material used for the conductive layer, the

substrate, and a producing method of them, employed may be various well-known materials and methods as with the case of the abovementioned conductive substrate.

Among them, it is preferable to employ a cathode electrode having a catalytic ability which makes an oxidation reaction of $I_3^-$ ions and a reduction reaction of other redox ions to perform with sufficient speed. Specific examples of the cathode electrode include a platinum electrode, an electrode in which a surface of a conductive substance is applied with platinum plating or platinum vacuum evaporation, a rhodium metal, a ruthenium metal, ruthenium oxide and carbon. Further, from a viewpoint of flexibility, as one of preferable embodiments, a foil-like film of above metallic substrates, a plastic sheet or a plastic roll may be employed as a substrate, and a polymer material as a conductive material is coated on the substrate.

Although the thickness of a conductive layer becoming the cathode electrode is not limited specifically, it is preferably 3 nm to 10 μm. When the conductive layer is metal, the thickness of the metal is preferably 5μm or less, and more preferably in a range of 10 nm to 3 5μm. As the surface resistivity of an opposite electrode becomes lower, it becomes better. Specifically, the range of the surface resistivity is preferably 50 Ω/□ or less, more preferably 20 Ω/□ or less, still more preferably 10 Ω/□ or less.

Since light may be received from one of the abovementioned conductive substrate and cathode electrode, or from both, it may be permissible that at least one of the conductive substrate and the cathode electrode is substantially transparent. From a viewpoint of enhancement of electric power generation efficiency, it is preferable to make a conductive substrate transparent and to make light enter from the conductive substrate side. In this case, the cathode electrode has preferably a capability to reflect light. As such a cathode electrode, glass or plastic on which a metal or a conductive oxide is vapor-deposited, or a metal thin film may be used.

As a cathode electrode, a conductive material is coated, plated or vapor-deposited (PVD, CVD) directly on the abovementioned charge transfer layer, or a single layer of a conductive substrate is pasted on a conductive layer side of a substrate having an opposite electrode conductive layer. Moreover, as with the case of the conductive substrate, especially in the case that a cathode electrode is transparent, employing a metallic wiring layer together is also one of the preferable embodiments.

As a opposite electrode, preferable is an electrode which has conductivity and acts as a catalyst in a reduction reaction of a redox electrolyte. For example, employed may be an electrode in which platinum, carbon, rhodium, or ruthenium is vapor-deposited on glass or a polymer film, or an electrode in which conductive particles are coated on glass or a polymer film.

## EXAMPLES

The present invention is described below with reference to examples, but the present invention is not limited to these examples. In the examples, "part" or "%" may be used. Unless specifically mentioned, each represents "weight part" or "weight%" respectively.

«Production of a light transmissive conductive substrate»

[Formation of an under coat layer]

A corona discharge treatment with 12 W·min/m$^2$ was applied on one side of a biaxially-stretched PEN substrate (base support) having a thickness of 200 μm, and an under coat coating solution B-1 was coated on it such that its dried-layer thickness became 0.1 μm. Successively, a corona discharge treatment wiht 12 W·min/m$^2$ was applied on the coated layer, and an under coat coating solution B-2 was coated on the coated layer such that its dried layer thickness become 0.06 μm. Then, the coated substrate was subjected to a heat treatment at 120 °C for 1.5 minutes, whereby a under-coated PEN film substrate (Base 1) was obtained.

<Under coat coating solution B-1>

| | |
|---|---|
| A copolymer latex (solid content: 30%) composed of 20 weight parts of styrene, 40 weight parts of glycidyl methacrylate and 40 weight parts of butyl acrylate | 50 g |
| $SnO_2$ sol (A) | 440 g |
| Compound (UL-1) | 0.2 g |

The above components were finished with water into 1,000 ml.

<Under coat coating solution B-2>

| | |
|---|---|
| Gelatin | 10 g |
| Compound (UL-1) | 0.2 g |
| Compound (UL-2) | 0.2 g |
| Silica particles (an average diameter of 3 μm) | 0.1 g |
| Hardener (UL-3) | 1 g |

The above components were finished with water into 1,000 ml.

Preparation of $SnO_2$ sol (A):

Into 2,000 ml of distilled water, 65g of $SnCl_4 \cdot 5H_2O$ was dissolved to form a homogeneous solution, subsequently this solution was boiled, and a precipitation was obtained. The obtained precipitation was taken out by decantation and the taken-out precipitation was washed repeated with distilled water. Silver nitrate was dropped into the distilled water used to wash the precipitation in order to check reaction of chlorine ions. After no reaction of chlorine ions was confirmed, distilled water was added to the washed precipitation such that the total amount of the solution became 2,000 ml. Into the solution, 40 ml of a 30% aqueous ammonia solution was added, and then the resultant solution was heated, whereby a uniform sol was obtained. Furthermore, while an aqueous ammonia solution was into the sol, the sol was heated and concentrated until the solid concentration of $SnO_2$ became 8.3 weight%, whereby $SnO_2$ sol (A) was obtained.

UL−1

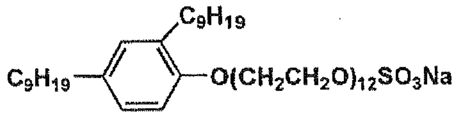

UL−2

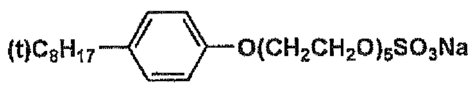

UL−3

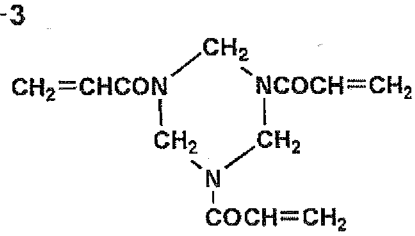

<Preparation of Silver halide fine grain emulsion EMP-1>

In a reaction vessel, Solution-A described below was kept at 34 °C, a pH value of Solution-A was adjusted to 2.95 with nitric acid (concentration: 6%) while Solution-A was agitated at high speed by the use of a mixing agitating apparatus disclosed in Japanese Patent Unexamined Publication No. 62-160128. Subsequently, into Solution-A, Solution-B described below and Solution-C described below were added over 8 minutes and 6 seconds at a fixed flow amount by the use of a double-jet method. After the addition has been completed, the pH value of the resultant solution was

adjusted to 5.9 with sodium carbonate (concentration: 5%), and subsequently into the resultant solution, Solution-D described below and Solution-E described below were added.

| | | |
|---|---|---|
| (Solution-A) | | |
| | Alkali processed inert gelatin (average molecular weight: 100,000) | 18.7 g |
| | Sodium chloride, | 0.31 g |
| | (Solution-I) described below | 1.59 ml |
| | Pure water | 1,246 ml |
| (Solution-B) | | |
| | Silver nitrate | 169.9 g |
| | Nitric acid (concentration: 6%) | 5.89 ml |
| | The above components were finished with pure water into | 317.1 ml. |
| (Solution-C) | | |
| | Alkali processed inert gelatin (average molecular weight: 100,000) | 5.66 g |
| | Sodium chloride | 58.8 g |
| | Potassium bromide | 13.3 g |
| | (Solution-I) described below | 0.85 ml |
| | (Solution-II) described below | 2.72 ml |
| | The above components were finished with pure water into | 317.1 ml. |
| (Solution-D) | | |
| | 2-Methyl-4-hydroxy-1,3,3a,7-tetraazaindene | 0.56 g |
| | Pure water | 112.1 ml |
| (Solution-E) | | |
| | Alkali-processed inert gelatin (average molecular weight: 100,000) | 3.96 g |
| | (Solution-I) described below | 0.40 ml |
| | Pure water | 128.5 ml |

(Solution-I)

Surfactant: a 10 weight% polyisopropylene polyethyleneoxy-disucccinic acid aster sodium salt methanol solution

(Solution-II)

A 10 weight% hexachloro rhodium complex aqueous solution

After the above-mentioned operations were finished, the above solution was subjected desalting and rinsing treatments by the use of a flocculation method at 40 °C in accordance with the conventional technique. Then, Solution-F described below and fungicide were added into the above solution, and the resultant mixture solution was dispersed at 60 °C, then the pH value of the mixture solution was adjusted to 5.90 at 40 °C. As a result, obtained was Silver chlorobromide cubic fine grain emulsion (EMP-1) containing 10 mol% of a silver bromide content and having an average grain diameter of 0.09 μm and a coefficient of variation of 10%.

(Solution-F)

| | |
|---|---|
| Alkali-processed inert gelatin (average molecular weight of 100,000) | 16.5 g |
| Pure water | 139.8 ml |

<Preparation of Photosensitive material 101>

On the Base 1 which was provided with the under coat layer as mentioned above, the Silver halide fine grain emulsion EMP-1 prepared as mentioned above was coated such that the coating weight of silver become 0.8 g/$m^2$ by silver conversion, and then the coating layer was dried, whereby Photosensitive material 101 1 was produced.

In production of the Photosensitive material 101, a hardener (tetrakis(vinylsulfonylmethyl) methane) was added with a ratio of an amount of 50 mg per 1 g of gelatin. Further, as a coating assistant agent, a surfactant (sulfosuccinic acid di(2-ethylhexyl) sodium) was added so as to adjust a surface tension. The amount of gelatin was adjusted such that the volume ratio of silver to gelatin became 0.5. The above volume ratio of silver to gelatin represents a value obtained from the calculation to divide a volume of the coated silver halide fine grains with the volume of the coated gelatin.

<Formation of Light transmissive conductive substrate S101>

The Photosensitive material 101 produced as described above was subjected to light exposure with a UV ray lamp through a lattice-shaped photo mask with a line width of 8 μm and an interval among lines of 250 μm. Subsequently, after the Photosensitive material 101 was subjected to development processing at 35 °C for 30 seconds by the use of Developer (DEV-1) described below, the Photosensitive material 101 was subjected to a fixing treatment at 30 °C for 60 seconds by the use of Fixer (FIX-1) described below, and to a water-washing treatment. Furthermore, the Photosensitive material 101 was subjected to a physical development at 30 °C for 5 minutes by the use of Physical developer (PD-1) described below, and then to a water-washing treatment. Then, the Photosensitive material 101 was cut into samples with a size of 300 mm x 300 mm, and the cut samples were immersed in Plating solution (EPL-1), and was subjected to an electrolytic copper plating treatment at 25 °C. In the electrolytic copper plating treatment, an applied current and a processing time were adjusted so that a wire width became 12.5 μm, and then a water washing process and a drying process were followed, whereby a current collecting wire substrate covered with a plating layer was obtained.

(DEV-1: Developer)

| | |
|---|---|
| Pure water | 500 ml |
| Metol | 2 g |
| Anhydrous sodium sulfite | 80 g |
| Hydroquinone | 4 g |
| Borax | 4 g |
| Sodium thiosulfate | 10 g |
| Potassium bromide | 0.5 g |

The above components were made into the total amount of 1 L by the addition of water.

(FIX-1: Fixer)

| | |
|---|---|
| Pure water | 750 ml |
| Sodium thiosulfate | 250 g |
| Anhydrous sodium sulfite | 15 g |
| Glacial acetic acid | 15 ml |
| Potash alum | 15 g |

The above components were made into the total amount of 1 L by the addition of water.

(PD-1: Physical developer)

| | |
|---|---|
| Pure water | 800 ml |
| Citric acid | 31 g |
| Hydroquinone | 7.8 g |
| Disodium hydrogen phosphate | 1.1 g |
| Aqueous ammonia solution (28%) | 2.2 ml |

(continued)

| | |
|---|---|
| Silver nitrate | 1.5 g |

The above components were made into the total amount of 1 L by the addition of water.

(EPL-1: Electrolytic plating liquid)

| | |
|---|---|
| Copper sulfate (pentahydrate) | 200 g |
| Sulfuric acid | 50 g |
| Sodium chloride | 0.1 g |

The above components were made into the total amount of 1 L by the addition of water.

Subsequently, a conductive covering layer was formed with a thickness of 100 nm on the above-mentioned current collecting grid and the aperture sections by the use of a high frequency magnetron sputtering system employing a tin-doped indium oxide (ITO) material as a target, whereby Light transmissive conductive substrate S101 was produced.

[Production of Light transmissive conductive substrate S102]

The Light transmissive conductive substrate S102 was produced with the same way as that for the light transmissive conductive substrate S101 except that an interlayer with a thickness of 15 mm was formed on the conductive covering layer by the use of a high frequency magnetron sputtering system employing a titanium oxide plate as a target in the production of the above-mentioned Light transmissive conductive substrate S101.

[Production of Light transmissive conductive substrate S103]

The Light transmissive conductive substrate S103 was produced with the same way as that for the light transmissive conductive substrate S101 except that the thickness of an interlayer was made to 80 mm in the production of the above-mentioned Light transmissive conductive substrate S102.

[Production of Light transmissive conductive substrate S104]

The Light transmissive conductive substrate S104 was produced with the same way as that for the Light transmissive conductive substrate S101 except that the thickness of an interlayer was made to 120 mm in the production of the above-mentioned Light transmissive conductive substrate S102.

[Production of Light transmissive conductive substrate S105]

The Light transmissive conductive substrate S105 was produced with the same way as that for the Light transmissive conductive substrate S101 except that an interlayer with a thickness of 15 mm was formed on the conductive covering layer by the use of a plasma CVD apparatus as shown in Fig. 2 under the following plasma processing condition 1 in the production of the above-mentioned Light transmissive conductive substrate S101.

(Plasma processing condition 1)

A power source PHF-6k (100 kHz) manufactured by Haiden Laboratory, Inc. was used as the first power source 21 in Fig. 2 and a power source CF-5000-13M (13.56 MHz) manufactured by Pearl Kogyo Co., Ltd. was used as the second power source 22.

| | |
|---|---|
| Discharge gas: Nitrogen gas | 94.9 volume % |
| Interlayer forming gas: Tetraisopropoxy titanium | 0.1 volume % |
| Additive gas: Oxygen gas | 5.0 volume % |
| Vaporizing temperature: 30 °C | |
| Electrode temperature: 90 °C | |

[Production of light transmissive conductive substrate S106]

The Light transmissive conductive substrate S106 was produced with the same way as that for the Light transmissive conductive substrate S105 except that an interlayer with a thickness of 80 nm was formed in the production of the above-mentioned Light transmissive conductive substrate S105.

[Production of Light transmissive conductive substrate S107]

The Light transmissive conductive substrate S107 was produced with the same way as that for the Light transmissive conductive substrate S105 except that an interlayer with a thickness of 120 nm was formed in the production of the abovementioned Light transmissive conductive substrate S105.

[Production of Light transmissive conductive substrate S108]

The Light transmissive conductive substrate S107 was produced with the same way as that for the Light transmissive conductive substrate S101 except that a substrate on which a conductive covering layer was formed was immersed in a 40 mM tetrachlorotitanium ($TiCl_4$) aqueous solution at 70 °C for 30 minutes, and then successively dried at 120 °C for 10 minutes so as to form an interlayer with a thickness of 15 nm in the production of the above-mentioned Light transmissive conductive substrate S101.

[Production of Light transmissive conductive substrate S109]

The Light transmissive conductive substrate S109 was produced with the same way as that for the Light transmissive conductive substrate S101 except that a substrate on which a conductive covering layer was formed was immersed in a 40 mM tetrachlorotitanium ($TiCl_4$) aqueous solution at 70 °C for 30 minutes, dried at 120 °C for 10 minutes, and then successively subjected to a plasma processing under the following plasma processing condition 2 so as to form an interlayer with a thickness of 15 nm in the production of the above-mentioned Light transmissive conductive substrate S108.

(Plasma processing condition 2)

A power source PHF-6k (100 kHz) manufactured by Haiden Laboratory, Inc. was used as the first power source 21 in Fig. 2.

Discharge gas: Nitrogen gas 95.0 volume %
Additive gas: Oxygen gas 5.0 volume %
Electrode temperature: 90 °C
Processing time: 30 seconds

[Production of Light transmissive conductive substrate S110]

The Light transmissive conductive substrate S110 was produced in the following ways: as a comparative substrate not provided with a current collecting wire, on Base 1 which was produced in the above ways and applied with a under coat layer, a conductive covering layer with a thickness of 150 nm was formed by the use of a high frequency magnetron sputtering system employing a tin-doped indium oxide (ITO) material as a target. Successively, on the formed conductive covering layer, an interlayer with a thickness of 120 nm was formed by the use of a high frequency magnetron sputtering system employing a titanium oxide plate as a target.

[Production of Light transmissive conductive substrate S111]

The Light transmissive conductive substrate S111 was produced with the same way as that for the Light transmissive conductive substrate S110 except that the interlayer was formed in the same way as that for the Light transmissive conductive substrate S109.

<<Evaluation of moisture vapor permeation rate

Herein, the moisture vapor permeation rate is represented by a permeation amount of moisture vapor per a

unit area and a unit time, and can be evaluated by the use of PERMATRAN-W3/33G type moisture vapor permeation rate measuring apparatus manufactured by MOCON Corporation under the condition of 40 °C and 90%RH in accordance with JIS K7129: 1992B method. Further, the moisture vapor permeation rate of $10^{-2}$ g/($m^2$•24h) or less was estimated from mass change in every 24 hours under the condition of 40 °C and 90%RH in accordance with JIS Z0208.

Here, the PEN film, which formed the conductive layer before an interlayer was formed, showed the moisture vapor permeation rate of 500 g/($m^2$•24h) or more.

Table 1 shows the results of the moisture vapor permeation rate estimated for the above-produced Light transmissive conductive substrates S101 to S111 with the abovementioned methods.

<<Production of a dye-sensitized type solar cell>>

[Production of SC-101]

On the Light transmissive conductive substrates S101, a titanium oxide paste (Ti-Nanoxide-TL manufactured by SOLAROMX Corporation) for low temperature sintering was printed by the use of a screen printing machine. At this time, the printed layers were laminated with a screen printing technique such that the thickness of the layer composed of the titanium oxide paste became 12μm. After natural drying, the laminated layers were dried at 120 °C for 30 minutes so as to form a semiconductor porous film. The periphery of the semiconductor porous film was shaved off, whereby the semiconductor porous film composed of the titanium oxide with a size of 50 mm x 50 mm (an effective area of 25 $cm^2$) was formed on the Light transmissive conductive substrates S101. After a drying process, the light transmissive conductive substrates S101 with the semiconductor porous film was immersed in a mixture solution of $5.0x10^{-4}$ mol/L of a ruthenium complex dye compound A (N719) for a dye-sensitized type solar cell and a solution of (acetonitrile : t-butanol = 1:1 (vol)) for 6 hours. After this dye adsorption process, excess dyes were washed away with the above acetonitrile: t-butanol solution, and then the semiconductor porous film was dried, whereby an anode electrode with the semiconductor porous film on which dyes adsorbed was produced.

A 200 μm thick titanium foil whose surface was covered with a 2 nm thick platinum layer by a magnetron sputtering apparatus was used as a cathode opposite electrode. This opposite electrode was provided with a hole for injecting an electrolyte.

The abovementioned anode electrode and cathode opposite electrodes were pasted together by the use of a 25 μm thick seat-like spacer used also as a sealing member (SX-1170-25 manufactured by SOLARONIX Corporation) with square holes with a width of 60 mm. A redox electrolyte was prepared such that 0.1 mol/L of lithium iodide, 0.05 mol/L of iodine, 0.6 mol/L of 1,2-dimethyl- 3-propyl imidazolium iodide, and 0.5 mol/L of t-butylpyridine were dissolved in a solvent of dehydrated methoxy propionitrile (MPN). Then, a charge transfer layer containing the above redox electrolytic solution was injected through an electrolytic solution injecting hole provided to the cathode electrode and the hole was sealed from the above portion with a sealing agent. The light receiving surface side of the substrate having the abovementioned metal oxide semiconductor layer was pasted with an antireflection film (a hard coat / antireflection type cellulose film manufactured by Konica Minolta Opt. Inc.), whereby a dye-sensitized type solar cell SC-101 was produced.

[Production of SC-102 to SC-111]

Dye-sensitized type solar cells SC-102 to SC-111 were produced in the same way as the method of producing SC-101 1 except that the Light transmissive conductive substrates S102 to S111 were used in place of the Light transmissive conductive substrate S101 respectively in the abovementioned method of producing the dye-sensitized type solar cell SC-101.

(Evaluation of photoelectric conversion characteristic of solar cells)

When the solar cells obtained in the above processes were irradiated with light having an intensity of 100 $mW/m^2$ via an AM1.5 filter, the IV characteristics of each of the solar cells was measured by a solar simulator (a low energy spectral sensitivity measuring apparatus CEP-25 manufactured by JASCO (JASCO Corporation)). In this measurement, a short circuit current value Jsc ($mA/cm^2$) and an open circuit voltage value Voc(V) were measured for three solar cells produced by the same production method with the same structure, and the average value of the three solar cells are indicated in Table 1. Further, from Jsc, Voc and FF (filter factor), a photoelectric conversion efficiency η(%) was obtained and is indicated also in Table 1.

(Durability evaluation of Solar cells)

Each of the solar cells SC-101 to SC-111 obtained in the above processes was subjected to ten cycles of temperature and humidity changes (from -20 °C to 85 °C at a relative humidity of 85%) corresponding to the temperature humidity cycle test A-2 in JIS C8938. The photoelectric conversion efficiencies η(%) before and after the temperature humidity changes were obtained for each solar cell with the abovementioned measuring method. Further, the ratio (%) of the photoelectric conversion efficiency after the temperature humidity cycle test to the photoelectric conversion efficiency before the temperature humidity cycle test was calculated for each solar cell, and the results are indicated in Table 1. In this evaluation, three solar cells were prepared by the same production method with the same structure and subjected to the measurements, and the average value of the three measurement value is indicated for each item in Table 1.

Table 1

| | Anode electrode substrate | Structure of interlayer | | Moisture vapor permeation rate g/($m^2$•24h) | Photoelectric conversion characteristics | | | | Durability | Remarks |
|---|---|---|---|---|---|---|---|---|---|---|
| | | Film producing method | Film thickness nm | | Jsc mA/$cm^2$ | Voc V | FF % | η% | % | |
| SC-101 | S101 | None | | 2.5 | 10.4 | 0.61 | 0.60 | 3.8 | 42 | Comparative |
| SC-102 | S102 | RF Sputtering $TiO_2$ film | 15 | 1.2 | 11.0 | 0.64 | 0.61 | 4.3 | 59 | Comparative |
| SC-103 | S103 | RF Sputtering $TiO_2$ film | 80 | 0.3 | 9.8 | 0.65 | 0.62 | 3.9 | 73 | Comparative |
| SC-104 | S104 | RF Sputtering $TiO_2$ film | 120 | $8.1\times10^{-2}$ | 9.4 | 0.65 | 0.63 | 3.8 | 83 | Invnetive |
| SC-105 | S105 | Direct plasma AGP | 15 | $9.4\times10^{-3}$ | 10.5 | 0.63 | 0.61 | 4.0 | 91 | Invnetive |
| SC-106 | S106 | Direct plasma AGP | 80 | $6.3\times10^{4}$ | 9.6 | 0.65 | 0.63 | 3.9 | 97 | Invnetive |
| SC-107 | S107 | Direct plasma AGP | 120 | $1.2\times10^{4}$ | 9.0 | 0.66 | 0.64 | 3.8 | 98 | Invnetive |
| SC-108 | S108 | $TiCl_4$ Coating | 15 | 0.6 | 11.6 | 0.65 | 0.59 | 4.4 | 68 | Comparative |
| SC-109 | S109 | $TiCl_4$ Coating+AGP | 15 | $2.5\times10^{-3}$ | 12.1 | 0.64 | 0.63 | 4.9 | 95 | Invnetive |
| SC-110 | S110 | RF Sputtering $TiO_2$ film | 120 | $8.0\times10^{-2}$ | 5.3 | 0.65 | 0.32 | 1.1 | 80 | Comparative |
| SC-111 | S111 | $TiCl_4$ Coating+AGP | 15 | $2.5\times10^{-3}$ | 6.2 | 0.64 | 0.40 | 1.6 | 87 | Comparative |

As clear from Table 1, in the dye-sensitized type solar cells SC-104 to SC-107 and SC-109 of the present invention, the influence due to the provision of the interlayer is small, and further the durability for the iodine redox is also improved. Specifically, it was confirmed that the optimum control of the moisture vapor permeation rate of the interlayer improves the durability.

In contrast, in comparative examples of SC-101 to SC-103 and SC-108, since the moisture vapor permeation rate of the interlayer was high, the current collecting grid was corroded by the iodine redox, and then, observed was the tendency that the photoelectric conversion efficiency after the temperature humidity cycle test became remarkably lower. As a result, it became clear that the durability can be improved greatly with the employment of the present invention.

Further, in SC-110 to SC-111, these cells had not current collecting wires, the influence caused by the iodine redox was small. However, in the cell size with an effective area of 25 $cm^2$, since the resistance of the light trasmissive conductive substrate itself was high, the short circuit current value Jsc ($mA/cm^2$) and FF (filter factor) became remarkably lower specifically. Accordingly, it became clear that it may be difficult to obtain sufficient performances in a practical dye-sensitized type solar cell.

## EXPLANATION OF REFERENCE SYMBOLS

| | |
|---|---|
| 1 | Transparent conductive layer |
| 1 a | Metallic current-collecting layer |
| 2 | Metal oxide semiconductor layer |
| 3 | Charge transfer layer |
| 4 | Conductive layer (opposite electrode) |
| 5 | Substrate (opposite electrode) |
| 5a | Transparent substrate |
| 6 | Metal oxide interlayer |
| 10 | Plasma discharge processing apparatus |
| 11 | First electrode |
| 12 | Second electrode |
| 21 | First power source |
| 22 | Second power source |
| 30 | Plasma discharge processing apparatus |
| 32 | Discharge space |
| 35 | Roll-shaped rotating electrode |
| 3 6 | Square tube type electrode |
| 40 | Electric field applying eeans |
| 41 | First power source |
| 42 | Second power source |
| 43 | First filter |
| 44 | Second filter |
| 50 | Gas feeding means |
| 51 | Gas generating apparatus |
| 52 | Air feeding port |
| 53 | Exhaust port |
| 60 | Electrode temperature regulating means |
| G | Thin film forming gas |
| G | Gas in a plasma state |
| G' | processing exhaust gas |

## Claims

**1.** In a dye-sensitized type solar cell constituted by an anode electrode in which at least a conductive substrate including a metallic current-collecting grid and a semiconductor porous film layer adsorbed with sensitizing dyes are stacked on a light transmissive substrate; a cathode electrode arranged opposite to the semiconductor porous film layer of the anode electrode; and an electrolyte encapsulated between two electrodes of the anode electrode and the cathode electrode, the dye-sensitized type solar cell is **characterized by** comprising an interlayer between the conductive substrate and the semiconductor porous film layer and the interlayer has a moisture vapor permeation rate of 0.1

g/($m^2$•24h) or less.

**2.** The dye-sensitized type solar cell described in claim 1 **characterized in that** the thickness of the interlayer is 5 nm or more and 140 nm or less.

**3.** In a producing method of a dye-sensitized type solar cell constituted by an anode electrode in which at least a conductive substrate including a metallic current-collecting grid and a semiconductor porous film layer adsorbed with sensitizing dyes are stacked on a light transmissive substrate; a cathode electrode arranged opposite to the semiconductor porous film layer of the anode electrode; and an electrolyte encapsulated between two electrodes of the anode electrode and the cathode electrode, the producing method of the dye-sensitized type solar cell is **characterized in that** an interlayer is provided between the conductive substrate and the semiconductor porous film layer and the interlayer is formed by a plasma CVD method under an atmospheric pressure or a pressure near the atmospheric pressure in the presence of a carrier gas composed of at least an organometal compound, a reducing gas, and a rare gas, or nitrogen.

FIG. 1

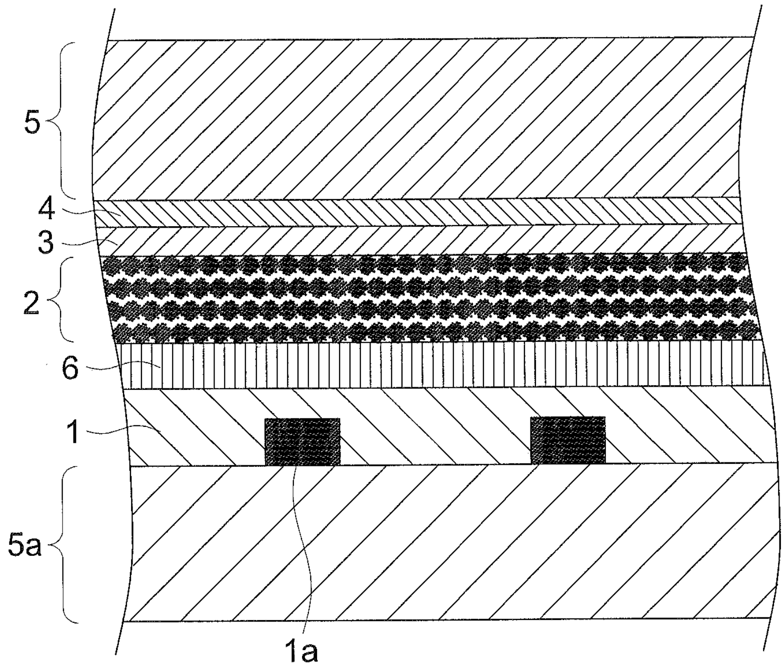


FIG. 2

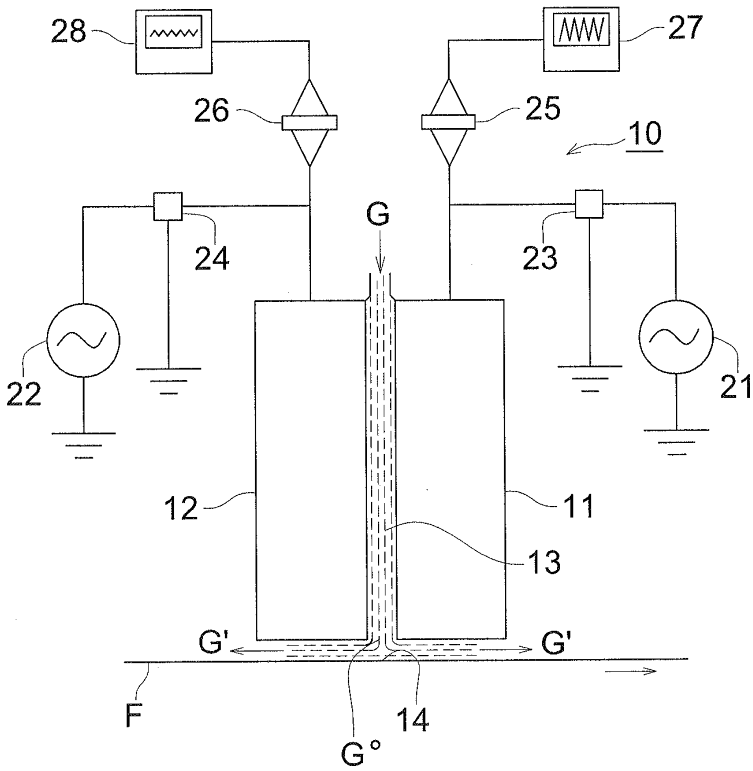

FIG. 3

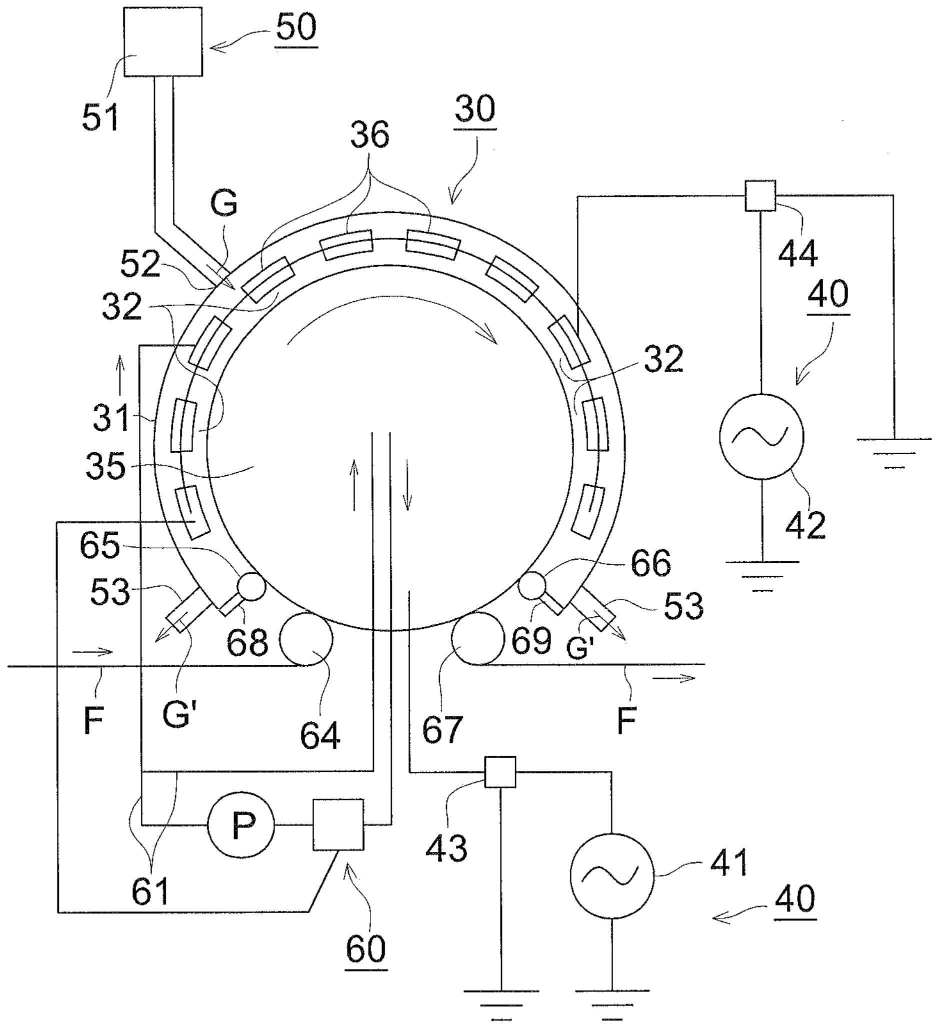
50
51
30
36
G
52
32
44
40
32
31
35
42
65
66
53
53
68
69
G'
F
G'
64
67
F
43
41
40
P
61
60

**INTERNATIONAL SEARCH REPORT**

International application No.
PCT/JP2009/058558

A. CLASSIFICATION OF SUBJECT MATTER
*H01M14/00*(2006.01)i, *H01L31/04*(2006.01)i

According to International Patent Classification (IPC) or to both national classification and IPC

B. FIELDS SEARCHED

Minimum documentation searched (classification system followed by classification symbols)
H01M14/00, H01L31/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-158727 A (Dainippon Printing Co., Ltd.), 16 June, 2005 (16.06.05), Claims; Par. Nos. [0052], [0107] to [0109] (Family: none) | 1-3 |
| Y | JP 2005-142086 A (Dainippon Printing Co., Ltd.), 02 June, 2005 (02.06.05), Claims (Family: none) | 1-2 |
| Y | JP 2003-123857 A (Bridgestone Corp.), 25 April, 2003 (25.04.03), Claims & US 2004/0248394 A1 & WO 2003/034533 A1 | 3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 July, 2009 (30.07.09) | 11 August, 2009 (11.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/058558

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-273425 A (Dainippon Printing Co., Ltd.), 18 October, 2007 (18.10.07), Claims; Par. No. [0076] (Family: none) | 3 |
| A | JP 2004-281288 A (Central Glass Co., Ltd.), 07 October, 2004 (07.10.04), Claims (Family: none) | 1-3 |
| A | JP 2005-158726 A (Dainippon Printing Co., Ltd.), 16 June, 2005 (16.06.05), Claims (Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002075471 A
- JP 2002151168 A
- JP 4086464 A
- JP 2007042366 A
- JP 2006278298 A
- JP 2003282163 A
- JP 2006352073 A
- JP 11035836 A
- JP 11067285 A
- JP 11086916 A
- JP 11097725 A
- JP 11158395 A
- JP 11163378 A
- JP 11214730 A
- JP 11214731 A
- JP 11238905 A
- JP 2004207224 A
- JP 2004319202 A
- EP 892411 A
- EP 911841 A
- US 4927721 A
- US 4684537 A
- US 5084365 A
- US 5350644 A
- US 5463057 A
- US 5525440 A
- JP 7249790 A
- JP 10504512 A
- WO 9850393 A
- JP 2000026487 A
- JP 2001223037 A
- JP 2001226607 A
- JP 3430254 B
- WO 9518456 A
- JP 8259543 A
- JP 2001357896 A
- JP 62160128 A


### Non-patent literature cited in the description


- *Electrochemistry,* 1997, vol. 65 (11), 923